# EUROPÄISCHE PATENTANMELDUNG

(11) **EP 4 700 434 A1**
(43) Veröffentlichungstag der Anmeldung: **25.02.2026**
(21) Anmeldenummer: 24195753.9
(22) Anmeldetag: 21.08.2024
(51) Int. Cl.: G01S 13/74, G01S 7/40, G01S 13/76, G01S 13/931

(54) **BETREIBEN EINES ABSTANDSBESTIMMUNGSSYSYTEMS**

(71) Anmelder: Siemens Aktiengesellschaft, 80333 München (DE)
(72) Erfinder: Hladik, Reinhard, 1210 Wien (AT); Schubert, Alexander, 09117 Chemnitz (DE); Wahrbichler, Joachim, 8043 Graz (AT); Schindhelm, Corina Kim, 82194 Gröbenzell (DE); Buettner, Thomas, 09122 Chemnitz (DE)
(74) Vertreter: Siemens Patent Attorneys

(57) **Zusammenfassung**

Die Erfindung betrifft ein Verfahren zum Betreiben eines Abstandsbestimmungssystems (10) mit einer Mobileinheit (14) und einer Stationseinheit (16), wobei von der Mobileinheit ein erstes Funksignal (46) mittels eines Sende-/Empfangsteils (20) ausgesendet wird, das erste Funksignal (46) von der Stationseinheit (16) mittels eines Sende-/Empfangsteils (22) empfangen wird, von der Stationseinheit ein zweites Funksignal (48) ausgesendet wird, das zweite Funksignal von der Mobileinheit empfangen wird, wobei die das jeweilige Funksignal aussendende Einheit Sicherheitsdaten hinzufügt, wobei die das jeweilige Funksignal empfangende Einheit die Sicherheitsdaten ausliest und mit vorgegebenen Erwartungsdaten vergleicht, wobei abhängig vom Vergleichen der Sicherheitsdaten mit den Erwartungsdaten ein Abstand (12) zwischen der Mobileinheit und der Stationseinheit bestimmt wird. Erfindungsgemäß erzeugt eine Überwachungseinheit (78, 80) ein Referenzsignal (82) mit Referenzsicherheitsdaten (96), wobei die Überwachungseinheit das Referenzsignal an einen Antennenanschluss (26, 40) abgibt, das Referenzsignal empfangen wird, das Bestimmen des Abstands mittels einer Auswerteeinheit (18) abhängig vom Vergleichen der Referenzsicherheitsdaten mit Referenzerwartungsdaten erfolgt.

## Beschreibung

Die Erfindung betrifft ein Verfahren zum Betreiben eines Abstandsbestimmungssystems, welches dazu dient, zumindest einen Abstand zwischen wenigstens zwei Einheiten des Abstandsbestimmungssystems, welche eine Mobileinheit und eine Stationseinheit aufweisen, unter Nutzung von Funk zu bestimmen, wobei die Mobileinheit und die Stationseinheit an zwei voneinander unterschiedlichen Positionen angeordnet sind, wobei von der Mobileinheit ein erstes Funksignal mittels eines Sende-/Empfangsteils der Mobileinheit ausgesendet wird, wobei die Mobileinheit einen ersten Sendewert erfasst, der abhängig von einem Zeitpunkt des Aussendens des ersten Funksignals durch das Sende-/Empfangsteil der Mobileinheit bestimmt wird, das erste Funksignal von der Stationseinheit mittels eines Sende-/Empfangsteils der Stationseinheit empfangen wird, wobei die Stationseinheit einen ersten Empfangswert erfasst, der abhängig von einem Zeitpunkt des Empfangens des ersten Funksignals durch das Sende-/Empfangsteil der Stationseinheit bestimmt wird, von der Stationseinheit als Reaktion auf das Empfangen des ersten Funksignals ein zweites Funksignal mittels des Sende-/Empfangsteils der Stationseinheit ausgesendet wird, wobei die Stationseinheit einen zweiten Sendewert erfasst, der abhängig von einem Zeitpunkt des Aussendens des zweiten Funksignals durch das Sende-/Empfangsteil der Stationseinheit bestimmt wird, das zweite Funksignal von der Mobileinheit mittels dem Sende-/Empfangsteil der Mobileinheit empfangen wird, wobei die Mobileinheit einen zweiten Empfangswert erfasst, der abhängig von einem Zeitpunkt des Empfangens des zweiten Funksignals durch das Sende-/Empfangsteil der Mobileinheit bestimmt wird, wobei die das jeweilige Funksignal aussendende Einheit Sicherheitsdaten im Funksignal hinzufügt, wobei die das jeweilige Funksignal empfangende Einheit die Sicherheitsdaten aus dem Funksignal ausliest und zumindest teilweise mit vorgegebenen Erwartungsdaten vergleicht, wobei abhängig vom Vergleichen der Sicherheitsdaten mit den Erwartungsdaten mittels einer Auswerteeinheit der Abstand zwischen der Mobileinheit und der Stationseinheit ferner zumindest abhängig vom ersten und zweiten Sendewert sowie abhängig vom ersten und zweiten Empfangswert bestimmt wird. Die Erfindung betrifft weiterhin ein Abstandsbestimmungssystem, welches dazu dient, zumindest einen Abstand zwischen wenigstens zwei Einheiten des Abstandsbestimmungssystems unter Nutzung von Funk zu bestimmen, wobei das Abstandsbestimmungssystem eine Mobileinheit als eine der wenigstens zwei Einheiten und eine Stationseinheit als eine zweite der wenigstens zwei Einheiten sowie wenigstens eine Auswerteeinheit aufweist, wobei die Mobileinheit und die Stationseinheit an zwei voneinander unterschiedlichen Positionen anordenbar sind, wobei das Abstandsbestimmungssystem ausgebildet ist, dass die Mobileinheit ein erstes Funksignal mittels eines Sende-/Empfangsteils der Mobileinheit aussendet, wobei die Mobileinheit einen ersten Sendewert erfasst, der abhängig von einem Zeitpunkt des Aussendens des ersten Funksignals durch das Sende-/Empfangsteil der Mobileinheit bestimmt ist, die Stationseinheit das erste Funksignal mittels eines Sende-/Empfangsteils der Stationseinheit empfängt, wobei die Stationseinheit einen ersten Empfangswert erfasst, der abhängig von einem Zeitpunkt des Empfangens des ersten Funksignals durch das Sende-/Empfangsteil der Stationseinheit bestimmt ist, die Stationseinheit als Reaktion auf das Empfangen des ersten Funksignals ein zweites Funksignal mittels des Sende-/Empfangsteils der Stationseinheit aussendet, wobei die Stationseinheit einen zweiten Sendewert erfasst, der abhängig von einem Zeitpunkt des Aussendens des zweiten Funksignals durch das Sende-/Empfangsteil der Stationseinheit bestimmt ist, die Mobileinheit das zweite Funksignal mittels dem Sende-/Empfangsteil der Mobileinheit empfängt, wobei die Mobileinheit einen zweiten Empfangswert erfasst, der abhängig von einem Zeitpunkt des Empfangens des zweiten Funksignals durch das Sende-/Empfangsteil der Mobileinheit bestimmt ist, wobei zumindest die Mobileinheit oder die Stationseinheit ausgebildet ist, dem jeweils auszusendenden Funksignal Sicherheitsdaten hinzuzufügen, wobei zumindest die Mobileinheit oder die Stationseinheit ferner ausgebildet ist, die Sicherheitsdaten aus einem jeweiligen empfangenen Funksignal auszulesen und zumindest teilweise mit vorgegebenen Erwartungsdaten zu vergleichen, wobei die Auswerteeinheit ausgebildet ist, abhängig vom Vergleichen der Sicherheitsdaten mit den Erwartungsdaten den Abstand zwischen der Mobileinheit und der Stationseinheit zumindest abhängig vom ersten und zweiten Sendewert sowie abhängig vom ersten und zweiten Empfangswert zu bestimmen. Schließlich betrifft die Erfindung auch eine Mobileinheit für das Abstandsbestimmungssystem sowie eine Stationseinheit für das Abstandsbestimmungssystem.

Gattungsgemäße Verfahren sowie Abstandsbestimmungssysteme sowie auch Mobileinheiten und Stationseinheiten hierfür sind im Stand der Technik bekannt, sodass es dem Grunde nach eines gesonderten druckschriftlichen Nachweises hierfür nicht bedarf. Zumindest teilweise automatisierte Maschinen, beispielsweise Roboter, zumindest teilweise autonom betriebene Fahrzeuge oder dergleichen werden immer mehr in Arbeitsbereichen eingesetzt, die sich zumindest teilweise mit Aufenthaltsbereichen von Menschen, insbesondere Arbeitsbereichen von arbeitenden Menschen beziehungsweise Arbeitspersonal überschneiden. Besonders wenn derartige Maschinen sowie die Menschen zeitgleich einen Arbeitsbereich gemeinsam nutzen, kommt der Arbeitssicherheit in Bezug auf die arbeitenden Menschen eine besondere Bedeutung zu. Es soll nämlich gewährleistet werden, dass im laufenden Betrieb der Maschine kein Mensch zu Schaden kommen kann. Um diese Anforderung erreichen zu können, ist es im Stand der Technik teilweise üblich, eine Arbeitsgeschwindigkeit der Maschine so anzupassen, insbesondere zu reduzieren, dass ausreichend Zeit zur Verfügung gestellt werden kann, in den laufenden Betrieb der Maschine so einzugreifen, dass die Maschine bei Annäherung beziehungsweise Anwesenheit eines Menschen entsprechend gesteuert beziehungsweise angehalten werden kann, dass der Mensch nicht verletzt wird. Auf diese Weise kann eine Kollisionsvermeidung (englisch: Collision Avoidance) erreicht werden, wobei zum Beispiel unter Nutzung von geeigneten Sensoren erkannt werden kann, wann ein Mensch in einen Arbeitsbereich der Maschine gelangt.

Darüber hinaus ist es möglich, beispielsweise durch Nutzung von geeigneten Berührungssensoren, zu vermeiden, dass ein Mensch verletzt wird, beispielsweise indem er eingeklemmt wird oder dergleichen. Besonders vorteilhaft erweist sich dies auch für autonom geführte Fahrzeuge. Besonders bei autonom geführten Fahrzeugen, bei denen Sensoren unter Nutzung von Laser vorgesehen sind, können unter Umständen nicht sämtliche relevanten Raumbereiche beziehungsweise Aufenthaltsbereiche zuverlässig erfasst werden, beispielsweise bei Ecken oder dergleichen. Dadurch kann der Fall auftreten, dass ein Mensch bei einem autonom geführten Fahrzeug plötzlich in den Fahrweg laufen kann. Aus diesem Grund ist bei autonom geführten Fahrzeugen häufig vorgesehen, dass diese sehr langsam fahren, sodass auch bei einer derartigen Situation zuverlässig ein rechtzeitiges Bremsen zur Kollisionsvermeidung erreicht werden kann.

Aber auch bei der Steuerung von Maschinen, wie Werkzeugmaschinen, Roboter oder dergleichen, können Probleme auftreten. Einerseits kann es gewünscht sein, dass sich das zum Steuern der Maschine erforderliche Steuerungspersonal möglichst in unmittelbarer Umgebung der Maschine befindet. Gleichwohl ist auch hier zu gewährleisten, dass das Steuerungspersonal von der Maschine so weit entfernt ist, dass im bestimmungsgemäßen Betrieb keine Verletzung auftritt. So kann zum Beispiel ein Wirkbereich vorgegeben werden, sodass einerseits keine Verletzung bei der Steuerung der Maschine eintreten kann. Der Wirkbereich kann zum Beispiel dadurch realisiert sein, dass ein vom Steuerungspersonal zu betätigendes Steuerungsgerät einerseits nicht weiter als ein vorgegebener Maximalabstand von der Maschine entfernt werden kann, Andrerseits kann mittels einer Vorrichtung, wie zum Beispiel einem Zaun, einem Lichtvorhang oder dergleichen, zugleich erreicht werden, dass sich das Steuerungspersonal der Maschine nicht weiter als vorgegeben nähert, um die Gefahr einer Verletzung weitgehend zu vermeiden.

Eine weitere Möglichkeit besteht darin, eine Position des Menschen in Bezug auf die Maschine zu bestimmen. Dadurch kann ein Abstand zwischen der Maschine und dem Menschen bestimmt werden, der es erlaubt festzustellen, wann sich der Mensch der Maschine in gefährdender Weise nähert. Zu diesem Zweck kann zum Beispiel ein Abstandsbestimmungssystem vorgesehen sein. Das Abstandsbestimmungssystem kann zum Beispiel eine Mobileinheit sowie eine Stationseinheit aufweisen. Die Mobileinheit kann als tragbare Einheit von demjenigen Menschen mitgeführt werden, der in den Bereich der Maschine gelangen könnte. Die Stationseinheit kann dagegen stationär an einer vorgegebenen festen Position angeordnet sein. Die Stationseinheit kann zum Beispiel an der Maschine selbst, insbesondere einem Maschinenteil, wie zum Beispiel einem Roboterarm oder dergleichen, angeordnet sein. Das Abstandsbestimmungssystem kann funkbasiert einen Abstand zwischen der Mobileinheit und der Stationseinheit bestimmen, wodurch ein Abstand zwischen dem Menschen und der Maschine ermittelt werden kann. Zu diesem Zweck können zwischen den wenigstens zwei Einheiten geeignete Funksignale ausgetauscht werden. Durch Auswerten von Funksignallaufzeiten ist es dann möglich, den Abstand zwischen den beiden Einheiten zu ermitteln. In diesem Zusammenhang kann die Nutzung von Ultra Wide Band (UWB) genutzt werden, wie es beispielsweise in der Norm IEEE 802.15.4z/2020 angegeben ist.

Es hat sich jedoch gezeigt, dass ein derartiges Abstandsbestimmungssystem unter bestimmten Umständen zumindest teilweise gestört sein kann, sodass das Abstandsbestimmungssystem nicht den korrekten Abstand ausgibt. Aufgrund der Störung ist es denkbar, dass das Abstandsbestimmungssystem einen verkürzten oder auch einen vergrößerten Abstand ausgeben könnte. Dies könnte jedoch die Sicherheit beziehungsweise die Gefährdung von Menschen im Bereich der Maschine signifikant betreffen. Besonders ein zu groß ermittelter Abstand kann jedoch eine Gefährdung des Menschen zur Folge haben.

In diesem Zusammenhang kann unter anderem das Problem auftreten, dass die Funksignale aufgrund von zum Beispiel Kollision oder auch durch unautorisierte Eingriffe in die Kommunikation gestört werden, sodass die Bestimmung des Abstands beeinflusst ist. Eine derartige Beeinflussung kann zu gefährlichen Zustanden führen, insbesondere wenn der Abstand - entgegen des tatsächlichen Werts - zu groß bestimmt wird und in der Folge ein real zu kleiner Abstand als ausreichend bestimmt wird. Derartige Fehler können aber auch durch Störungen im Bereich einer Hardware oder einer Software hervorgerufen werden. Diesem Problem kann mit einem Verfahren zur Integritätsprüfung der Funksignale begegnet werden (englisch: Message Integrity Check; MIC). Hierbei handelt es sich um ein Verfahren in der Datenkommunikation, das die Vertrauenswürdigkeit der Daten im Funkverkehr prüft. Beispielsweise kann vorgesehen sein, dass die Funksignale fortlaufend durchnummeriert werden. Diese laufende Nummer kann im verschlüsselten Teil des Funksignals, insbesondere im Bereich der Sicherheitsdaten, mitübertragen werden. Bei der das jeweilige Funksignal empfangenden Einheit kann auf die laufende Nummer geprüft werden, und es können Funksignale, die nicht zu der jeweils laufenden Nummer passen, ohne weitere Bearbeitung verworfen werden. Dadurch können zum Beispiel auch viele bekannte Hackerangriffe abgewehrt werden. Vorzugsweise kann eine symmetrische Verschlüsselung vorgesehen sein, wobei zwischen mehreren Verfahren gewählt werden kann, die zum Beispiel auf dem Advanced Encryption Standard (AES) basieren können. So kann zum Beispiel mittels AES eine Sequenz von Impulsen erzeugt werden, um eine Scrambled Timestamp Sequence (STS) zu generieren.

Diese STS kann im Funksignal mitgesendet werden. Darüber hinaus kann sie auch zur Zeitstempelbildung herangezogen werden. Bei der das jeweilige Funksignal empfangenden Einheit wird die gleiche Sequenz erwartet. Es kann mitgezählt werden, wieviele Impulse übereinstimmen. Die Anzahl der Impulse kann von einem fehlergesicherten Teil der das jeweilige Funksignal empfangenden Einheit ausgelesen werden und mit vorgegebenen Erwartungsdaten verglichen werden, um sicherzustellen, dass keine Störung stattgefunden hat und die Abstandsbestimmung nicht verfälscht ist. Ein solches Verfahren nutzt zum Beispiel auch der Standard IEEE 802.15.4z.

Auch wenn sich der Stand der Technik bewährt hat, verbleibt Verbesserungsbedarf. So kann zum Beispiel eine Störung im Sende-/Empfangsteil der jeweiligen Einheit dazu führen, dass das Funksignal, obwohl das Funksignal kompromittiert wurde, durch eine gestörte beziehungsweise defekte Sicherheitsfunktion als integer beziehungsweise gut bewertet wird. Ein derartiger Fehler in der Sicherheitsfunktion kann dadurch zu einer verfälschten Abstandsbestimmung führen.

Der Erfindung liegt die Aufgabe zugrunde, die Zuverlässigkeit eines funkbasierten Abstandsbestimmungssystems bei der vorgenannten Anwendung zu verbessern.

Als Lösung werden mit der Erfindung ein Verfahren, ein Abstandsbestimmungssystem sowie eine Mobileinheit und eine Stationseinheit gemäß den unabhängigen Ansprüchen vorgeschlagen.

Vorteilhafte Weiterbildungen ergeben sich durch Merkmale der abhängigen Ansprüche.

In Bezug auf ein gattungsgemäßes Verfahren wird mit der Erfindung gemäß einem ersten Aspekt insbesondere vorgeschlagen, dass wenigstens eine Überwachungseinheit des Abstandsbestimmungssystems ein Referenzsignal mit Referenzsicherheitsdaten erzeugt, die Überwachungseinheit das Referenzsignal an einen Antennenanschluss des Sende-/Empfangsteils der die Überwachungseinheit aufweisenden Einheit abgibt, das Referenzsignal von dem Sende-/Empfangsteil der die Überwachungseinheit aufweisenden Einheit empfangen wird, wobei abhängig vom Vergleichen der Referenzsicherheitsdaten mit vorgegebenen Referenzerwartungsdaten der die Überwachungseinheit aufweisenden Einheit eine Funktionstüchtigkeit der die Überwachungseinheit aufweisenden Einheit abgeschätzt wird.

In Bezug auf ein gattungsgemäßes Abstandsbestimmungssystem wird mit der Erfindung insbesondere vorgeschlagen, dass das Abstandsbestimmungssystem eine Überwachungseinheit aufweist, die ausgebildet ist, ein Referenzsignal mit Referenzsicherheitsdaten zu erzeugen und das Referenzsignal an einen Antennenanschluss des Sende-/Empfangsteils der die Überwachungseinheit aufweisenden Einheit abzugeben, wobei das Sende-/Empfangsteil der die Überwachungseinheit aufweisenden Einheit ausgebildet ist, das Referenzsignal zu empfangen, die Referenzsicherheitsdaten aus dem Referenzsignal auszulesen, und die ausgelesenen Referenzsicherheitsdaten mit vorgebbaren Referenzerwartungsdaten zu vergleichen, und wobei die Auswerteeinheit ferner ausgebildet ist, abhängig von dem Vergleichen eine Funktionstüchtigkeit der die Überwachungseinheit aufweisenden Einheit abzuschätzen.

Die Erfindung basiert unter anderem auf den Gedanken, dass Störungen im Sende-/Empfangsteil, die zu fehlerhaften Abstandsbestimmungen führen können, identifiziert werden können. Dies betrifft insbesondere einen Bereich der jeweiligen Einheit beziehungsweise des jeweiligen Sende-/Empfangsteils, der unter anderem mit dem Vergleichen der Sicherheitsdaten mit den Erwartungsdaten befasst ist. Dadurch wird es möglich, Abweichungen in Bezug auf die bestimmungsgemäße Funktion der jeweiligen Einheit, insbesondere der Mobileinheit beziehungsweise der Stationseinheit, zu ermitteln und bei einer derartigen Abweichung ein entsprechendes Signal, insbesondere ein Störungssignal abzugeben. Eine übergeordnete Steuerung kann dann eine entsprechende Reaktion bei der Steuerung der Maschine hervorrufen, beispielsweise eine Nutzungsdauer beziehungsweise einen Nutzungsbereich einschränken oder auch eine Geschwindigkeit reduzieren. Auch ein Deaktivieren der Maschine ist denkbar. Dadurch kann ein hohes Sicherheitsniveau erreicht werden, sodass im Stand der Technik übliche Sicherheitsmaßnahmen wie eine geringe Betriebsgeschwindigkeit, eine Absperrvorrichtung, wie beispielsweise ein Schutzzaun oder dergleichen, weitgehend vermieden werden können. Die Erfindung basiert dabei auf dem Prinzip der Zwei-Wege-Ortung (englisch: Two Way Ranging; TWR). Mit der Erfindung ist es somit beispielsweise möglich, ein zweidimensionales oder auch dreidimensionales Ortungssystem oder Abstandsbestimmungssystem bereitzustellen, welches gewährleistet, dass ein Mindestabstand zuverlässig eingehalten werden kann. Das Abstandsbestimmungssystem soll insbesondere einen fehlerbehaftet bestimmten Abstand nicht größer als den zugehörigen tatsächlich realen Abstand angeben, damit eine Gefährdung nicht fälschlich ausgeschlossen wird. Dadurch kann vermieden werden, dass insbesondere Abstandsmessungen nicht fälschlich verkürzt werden, die zur Folge hätten, dass ein Gefährdungsbereich entstehen würde, der zur Gefährdung von Menschen durch den Betrieb der Maschine führen könnten. Insbesondere ermöglicht es die Erfindung, Fehler beziehungsweise Störungen, die zum Beispiel eine Integrität des empfangenen Funksignals, zum Beispiel die Sicherheitsdaten, betreffen und die im Sende-/Empfangsteil auftreten können, zu ermitteln, besonders wenn sie verkürzte Abstandsmessungen zur Folge hätten. Insbesondere können die Sicherheitsdaten dazu dienen, die Integrität des empfangenen Funksignals zu gewährleisten.

Die Erfindung nutzt ferner den Gedanken, dass die Sicherheit der Kommunikation, insbesondere in Bezug auf den Austausch der Funksignale, durch geeignete Sicherheitsmaßnahmen verbessert werden kann. Zu diesem Zweck ist insbesondere vorgesehen, dass zumindest einige der Funksignale, vorzugsweise jedoch sämtliche der Funksignale, jeweilige Sicherheitsdaten aufweisen, die sendeseitig dem jeweiligen Funksignal hinzugefügt werden, und die empfangsseitig ausgelesen und mit Erwartungsdaten verglichen werden können. Dadurch ist es möglich, Störungen, die die Funksignale beeinträchtigen können und die dazu führen können, dass die Abstandsbestimmung durch das Abstandsbestimmungssystem beeinträchtigt werden kann, zu erkennen und gegebenenfalls Gegenmaßnahmen einzuleiten. Derartige Störungen können beispielsweise dadurch verursacht sein, dass Funksignale zeitlich überlappend gesendet beziehungsweise empfangen werden, oder auch dadurch, dass Dritte, zum Beispiel unberechtigt, die Kommunikation stören, zum Beispiel im Rahmen eines sogenannten Hackerangriffs. Unter Nutzung der Sicherheitsdaten und der Erwartungsdaten können derartige Störungen erkannt werden. Eine Möglichkeit für ein derartiges Verfahren ist zum Beispiel in dem Standard IEEE 802.15.4z angegeben. Die Erfindung ist jedoch nicht auf diesen Standard begrenzt.

Das Funksignal kann zur Aufnahme der Sicherheitsdaten einen entsprechenden Sicherheitsdatenbereich beziehungsweise Sicherheitsdatenabschnitt aufweisen. In diesem Bereich beziehungsweise Abschnitt kann die das Funksignal aussendende Einheit die Sicherheitsdaten anordnen. Die Sicherheitsdaten können vorzugsweise digitale Daten sein, beispielsweise binäre digitale Daten, hexadezimale digitale Daten und/oder dergleichen. Entsprechend können die Erwartungsdaten ausgebildet sein. Sowohl die Sicherheitsdaten als auch die Erwartungsdaten können gemäß einem Sicherheitsverfahren, beispielsweise basierend auf AES (advanced encryption standard) oder dergleichen, erzeugt werden. Das Erzeugen der Sicherheitsdaten und der Erwartungsdaten kann beispielsweise von einem Sende- beziehungsweise Empfangszeitpunkt des jeweiligen Funksignals abhängig sein. Es ist vorzugsweise vorgesehen, dass empfangsseitig im Wesentlichen die gleiche Sequenz der Sicherheitsdaten als Erwartungsdaten erwartet wird. Beispielsweise kann vorgesehen sein, dass bei binären Daten eine Anzahl und/oder ein Wert von aufeinanderfolgenden Bits, die in den Sicherheitsdaten enthalten sind, gezählt werden. Im Rahmen des Vergleichens kann beispielsweise vorgesehen sein, dass gezählt wird, wieviele Abweichungen empfangsseitig zwischen den Sicherheitsdaten und den Erwartungsdaten vorliegen. Der Vergleich kann umfassen, dass die Anzahl der Abweichungen mit einem Erwartungswert verglichen wird, der berücksichtigt, dass bei einer Funkübertragung in der Regel ein gewisses Maß an Abweichungen zwischen den empfangenen und ausgelesenen Sicherheitsdaten und den Erwartungsdaten besteht. Der Erwartungswert kann zumindest ein Teil der Erwartungsdaten sein.

Wird beim Vergleichen der Sicherheitsdaten mit den Erwartungsdaten eine unzulässige Abweichung festgestellt, beispielsweise indem der Vergleich ergibt, dass der Erwartungswert überschritten wird, so kann vorgesehen sein, dass das entsprechende Funksignal für die Weiterverarbeitung verworfen wird. Es kann auch vorgesehen sein, dass ein entsprechendes Meldesignal abgegeben wird, welches eine entsprechende Störung an weitere Einheiten des Abstandsbestimmungssystems zu übermitteln vermag. Weitere Möglichkeiten oder Kombinationen sind denkbar.

Die Erfindung nutzt die weitere Überlegung, dass das Sende-/Empfangsteil selbst einer jeweiligen der Einheiten, der Sicherheitsbereich der jeweiligen Einheit, und/oder gegebenenfalls weitere Teile oder Einheiten eine Störung aufweisen kann, sodass fälschlicherweise ein Funksignal als zulässig bewertet wird, obwohl tatsächlich die Abweichung zwischen den empfangenen und ausgelesenen Sicherheitsdaten und den Erwartungsdaten größer als zulässig ist. Um die Sicherheit weiter zu verbessern, sieht die Erfindung daher vor, diesen Bereich der jeweiligen Einheit einer zusätzlichen Prüfung beziehungsweise einem Test zu unterziehen, um damit die Sicherheit weiter zu verbessern.

Diesem Zweck dient das Referenzensignal, welches dem Grunde nach wie ein jeweiliges Funksignal aufgebaut sein kann. Auch das Referenzsignal kann einen Sicherheitsdatenbereich beziehungsweise einen Sicherheitsdatenabschnitt aufweisen, in dem Referenzsicherheitsdaten als die Sicherheitsdaten angegeben sind. Die Referenzsicherheitsdaten können gleichermaßen wie die Sicherheitsdaten für den bestimmungsgemäßen Betrieb des Abstandsbestimmungssystems erzeugt werden. Das Referenzsignal wird von der jeweiligen Einheit nicht über Funk ausgesendet, sondern es wird stattdessen lediglich auf einen Antennenanschluss der Sende-/Empfangseinheit aufgegeben. Damit kann das Referenzsignal von der jeweiligen Einheit dem Grunde nach wie ein empfangenes Funksignal weiterverarbeitet werden. Insbesondere betrifft dies die Sicherheitsfunktion. Es ist daher vorgesehen, dass das Referenzsignal dahingehend verarbeitet wird, dass aus dem Sicherheitsdatenbereich beziehungsweise Sicherheitsdatenabschnitt die Referenzsicherheitsdaten ausgelesen werden und mit vorgebbaren beziehungsweise vorgegebenen Referenzerwartungsdaten verglichen werden, die dem Grunde nach den Erwartungsdaten für den bestimmungsgemäßen Betrieb entsprechen können. Die weitere Signalverarbeitung entspricht dann im Wesentlichen dem, was bereits zuvor in Bezug auf die bestimmungsgemäßen Funksignale erläutert wurde. Da das Referenzsignal nicht über Funk übermittelt wird, kann daraus geschlossen werden, dass die beim Übermitteln mittels Funk auftretenden Störungen beim Aufgeben des Referenzsignals am Antennenanschluss nicht vorliegen. Das Referenzsignal kann dadurch im Wesentlichen ungestört auf das Sende-/Empfangsteil der jeweiligen Einheit aufgegeben werden. Dies erlaubt es, die Sicherheitsverarbeitung der Einheit auf unterschiedlichste Weise entsprechend zu prüfen, zumal die Referenzsicherheitsdaten in der jeweiligen Einheit bereits bekannt sind.

Die Referenzsicherheitsdaten können zum Beispiel eine digitale Bitfolge oder auch lediglich eine Folge von Impulsen aufweisen. Dem Grunde nach können sie entsprechend der Sicherheitsdaten gewählt und/oder strukturiert sein.

Wird im Rahmen des Vergleichens festgestellt, dass die Referenzsicherheitsdaten beim Vergleich mit den Referenzerwartungsdaten eine unzulässige Abweichung zeigen. Es kann somit abhängig von dem Vergleichen eine Funktionstüchtigkeit der die Überwachungseinheit aufweisenden Einheit abgeschätzt werden, so kann dies als Störung der jeweiligen Einheit gewertet werden und es kann beispielsweise ein entsprechendes Meldesignal abgegeben werden. Alternativ oder ergänzend kann auch die jeweilige Einheit lediglich zumindest teilweise deaktiviert werden. Die Erfindung ermöglicht es somit unter anderem, insbesondere die Signalverarbeitung eines empfangenen Funksignals die die jeweilige Einheit, vorzugsweise das Sende-/Empfangsteil der jeweiligen Einheit, zu prüfen beziehungsweise zu testen. Dies schließt vorzugsweise auch die Vergleichsfunktionalität mit ein. Zum Abschätzen der Funktionsbereitschaft beziehungsweise der Funktionstüchtigkeit kann zum Beispiel ein Wertebereich für das Vergleichsergebnis vorgegeben werden. Der Wertebereich kann empirisch, beispielsweise mittels geeigneter Versuche oder anhand von Erfahrungswerten und/oder dergleichen vorgegeben sein. Darüber hinaus können statistische Methoden genutzt werden, um den Wertebereich zu bestimmen. Der Wertebereich kann einen oberen und/oder einen unteren Grenzwert aufweisen.

Es kann ferner vorgesehen sein, dass die von der Überwachungseinheit vorgesehenen Referenzsicherheitsdaten an das Sende-/Empfangsteil übermittelt werden, um dort als Referenzerwartungsdaten genutzt werden zu können. Dies ermöglicht es auch, Anforderungen hinsichtlich der Funktionsprüfung variieren zu können, insbesondere um unterschiedliche Funktionsbereiche in Bezug auf das Vergleichen testen zu können.

Besonders vorteilhaft können mehrere Referenzensignale vorgesehen sein, die nacheinander auf den Antennenanschluss aufgegeben werden. Die Referenzsignale können dem Grunde nach hinsichtlich der Daten im Wesentlichen identisch ausgebildet sein. Es kann aber auch vorgesehen sein, dass insbesondere die Referenzsicherheitsdaten der aufeinanderfolgenden Funksignale voneinander abweichen. Dadurch kann die Testfunktionalität in Bezug auf die Sicherheitsfunktion weiter verbessert werden.

Diese Funktionalität braucht nicht in jeder Einheit vorgesehen zu sein. Vorzugsweise ist sie jedoch in jeder Einheit vorgesehen, insbesondere der Mobileinheit und auch der Stationseinheit. Das Abstandsbestimmungssystem braucht nicht nur zwei Einheiten aufzuweisen. Es kann vorgesehen sein, dass neben einer Mobileinheit mehrere Stationseinheiten vorgesehen sein können. Beispielsweise können zwei oder sogar drei Stationseinheiten vorgesehen sein. Dadurch ist es möglich, mittels Abstandsmessungen zwischen den jeweiligen Stationseinheiten und der Mobileinheit eine räumliche Position der Mobileinheit zu bestimmen. Dabei wird vorzugsweise angenommen, dass die Positionen der Stationseinheiten bekannt sind. Die Erfindung ist ferner nicht auf die Anwendung einer einzigen Mobileinheit begrenzt. Natürlich können auch mehrere Mobileinheiten vorgesehen sein, wobei die Abstände der Mobileinheiten zu wenigstens einer Stationseinheit unabhängig voneinander bestimmt werden können. Besonders vorteilhaft erweist es sich, wenn jeweilige Abstandsmessungen im Zeitmultiplex vorgesehen werden, sodass die Mobileinheiten und die Stationseinheiten im Wesentlichen den gleichen Frequenzbereich für die Funksignale nutzen können. Dem Grunde nach besteht jedoch auch die Möglichkeit, für die Abstandsbestimmungen zwischen mehreren Einheiten zumindest teilweise stationseinheitsindividuelle beziehungsweise mobileinheitsindividuelle Frequenzen beziehungsweise Frequenzbereiche zu nutzen. Dies kann ermöglichen, dass Abstandsbestimmungen zumindest teilweise zeitgleich erfolgen können. Gemäß der Erfindung kann die zu überwachende Einheit, insbesondere die Mobileinheit beziehungsweise die Stationseinheit, die Überwachungseinheit aufweisen.

Die Auswerteeinheit kann eine separate Einheit sein, die mit der die Überwachungseinheit aufweisenden Einheit in Kommunikationsverbindung steht. Die Auswerteeinheit kann jedoch auch zumindest teilweise von der die Überwachungseinheit aufweisenden Einheit umfasst sein. Die Auswerteeinheit kann auch von einer Einheit zumindest teilweise erfasst sein, die die Überwachungseinheit nicht aufweist. Die Stationseinheit kann insbesondere ein Gateway oder dergleichen aufweisen.

Die Zwei-Wege-Ortung kann zum Beispiel derart realisiert sein, dass die Mobileinheit ein erstes Funksignal mittels des Sende-/Empfangsteils der Mobileinheit aussendet. Die Mobileinheit erfasst dann einen ersten Sendewert, der abhängig von einem Zeitpunkt des Aussendens des ersten Funksignals durch das Sende-/Empfangsteil der Mobileinheit bestimmt wird. Das erste Funksignal kann dann von der Stationseinheit mittels des Sende-/Empfangsteils der Stationseinheit empfangen werden. Die Stationseinheit erfasst einen ersten Empfangswert, der abhängig von einem Zeitpunkt des Empfangens des ersten Funksignals durch das Sende-/Empfangsteil der Stationseinheit bestimmt wird. Nachdem die Stationseinheit das erste Funksignal empfangen hat, sendet die Stationseinheit als Reaktion auf das Empfangen des ersten Funksignals ein zweites Funksignal mittels des Sende-/Empfangsteils der Stationseinheit aus. Die Stationseinheit erfasst einen zweiten Sendewert, der abhängig von einem Zeitpunkt des Aussendens des zweiten Funksignals durch das Sende-/Empfangsteil der Stationseinheit bestimmt wird. Das zweite Funksignal wird von der Mobileinheit mittels dem Sende-/Empfangsteil der Mobileinheit empfangen. Die Mobileinheit erfasst einen zweiten Empfangswert, der abhängig von einem Zeitpunkt des Empfangens des zweiten Funksignals durch das Sende-/Empfangsteil der Mobileinheit bestimmt wird. Die Sendewerte und die Empfangswerte können in der jeweiligen Einheit abrufbar gespeichert werden. Es kann auch vorgesehen sein, dass die Sendewerte und die Empfangswerte zum Auswerten durch eine Auswerteeinheit an diese übermittelt werden.

Die Mobileinheit und/oder die Stationseinheit können ein Steuerteil aufweisen, welches die Funktionalität der jeweiligen Einheit entsprechend steuert. Die Steuereinheit kann auch das Erfassen und/oder Speichern des jeweiligen Sendewerts beziehungsweise des jeweiligen Empfangswerts veranlassen oder durchführen.

Der Sendewert beziehungsweise der Empfangswert kann ein jeweiliger Zeitpunkt sein. Es kann zum Beispiel aber auch ein Zählerstand eines fortlaufenden Zählers sein, der in der jeweiligen Einheit betrieben wird. Es kann aber auch vorgesehen sein, dass der Sendewert beziehungsweise der Empfangswert von einem Zählerstand eines externen kontrollierten Zählers abhängig ist. Dies kann eine Synchronisation der erfassten Werte verbessern. Der Sendewert beziehungsweise der Empfangswert kann zum Beispiel ein Zeitpunkt (englisch: time stamp; TS) sein.

Die erfassten Werte können an die Auswerteeinheit übermittelt werden, wobei die Auswerteeinheit dann aufgrund der erfassten Werte den Abstand zwischen der Mobileinheit und der Stationseinheit zu bestimmen vermag. Zum Übermitteln kann vorgesehen sein, dass ein drittes Funksignal von der jeweiligen Einheit an die Auswerteeinheit beziehungsweise die die Auswerteeinheit aufweisende Einheit übermittelt werden kann. Das dritte Funksignal kann die entsprechenden Werte, die von der das dritte Funksignal aussendenden Einheit erfasst wurden, enthalten. Beispielsweise ist es möglich, dass die Auswerteeinheit von der Stationseinheit umfasst ist. In diesem Fall kann dann die Mobileinheit das dritte Funksignal an die Stationseinheit übermitteln, sodass in der Stationseinheit sämtliche erfassten Werte, nämlich die erfassten Sendewerte und die erfassten Empfangswerte zur Verfügung stehen, um durch deren Auswertung den Abstand zu bestimmen. Dem Grunde nach ist es natürlich auch möglich, dass die Funktionalitäten der Mobileinheit und der Stationseinheit zumindest teilweise vertauscht sind, ohne den Gedanken der Erfindung zu verlassen. Das dritte Funksignal kann auch als Schlusssignal (englisch: final signal) bezeichnet werden.

Die Überwachungseinheit des Abstandsbestimmungssystems ist vorzugsweise zumindest in derjenigen der Einheiten angeordnet, für die eine entsprechende Überwachung durchgeführt werden soll. Dies kann natürlich für jede der Einheiten vorgesehen sein. Dem Grunde nach kann die Überwachungseinheit jedoch auch lediglich in einer der Mobileinheiten oder einer der Stationseinheiten vorgesehen sein. Es ist jedoch zu bedenken, dass lediglich die Einheit überwacht werden kann, die auch eine Überwachungseinheit aufweist. Die Überwachungseinheit kann zumindest teilweise von einer jeweiligen Steuereinheit der jeweiligen Einheit umfasst sein. Sie kann aber auch als separate Einheit in der jeweiligen die Überwachungseinheit aufweisenden Einheit angeordnet sein.

Die Mobileinheit ist vorzugsweise eine einzeln handhabbare, insbesondere tragbare, Einheit, die möglichst kompakt und leicht ausgebildet ist, damit sie beispielsweise von einem Menschen einfach mitgeführt werden kann. Die Mobileinheit kann nach Art eines Mobilfunkendgeräts oder dergleichen ausgebildet sein oder zumindest teilweise von diesem bereitgestellt sein.

Insbesondere ist das Referenzsignal ein Signal, welches nur innerhalb der jeweiligen Einheit genutzt wird. Es wird also nicht von einer Einheit ausgesendet, um von einer anderen Einheit empfangen zu werden.

Es wird ferner vorgeschlagen, dass das Aussenden und empfangen der ersten und der zweiten Funksignale in jeweiligen vorgegebenen, zeitlich voneinander beabstandeten Kommunikationszeiträumen stattfindet, wobei das Abgeben und Empfangen des Referenzsignals sowie das zugehörige Auswerten und Vergleichen in einem jeweiligen, vorzugsweise vorgegebenen, Überwachungszeitraum erfolgt, der zeitlich zwischen zwei aufeinanderfolgenden, vorzugsweise vorgegebenen, Kommunikationszeiträumen ist. Dadurch ist es möglich, die Überwachungsfunktionalität in Bezug auf die jeweilige Einheit, die eine Überwachungseinheit aufweist, in einem Zeitraum durchführen zu können, in dem die Signalverarbeitung in Bezug auf die ersten und die zweiten Funksignale nicht vorgenommen zu werden braucht. Vorzugsweise ist das Abstandsbestimmungssystem ausgebildet, das Aussenden und Empfangen des ersten und des zweiten Funksignals in jeweiligen vorgegebenen, zeitlich aufeinanderfolgenden Kommunikationszeiträumen stattfindet und das Abgeben und Empfangen des Referenzsignals sowie das zugehörige Auswerten und Vergleichen in einem jeweiligen Überwachungszeitraum erfolgt, der zeitlich zwischen zwei aufeinanderfolgenden Kommunikationszeiträumen ist, wobei das Abstandsbestimmungssystem ausgebildet ist, die Koppeleinheit abhängig vom Überwachungszeitraum zu betreiben. Das ermöglicht es, für den Überwachungsbetrieb der jeweiligen Einheit auch Teile beziehungsweise Einheiten zu nutzen, die im bestimmungsgemäßen Betrieb für das Aussenden und Empfangen zumindest der ersten und der zweiten Funksignale erforderlich sind. Dadurch können Ressourcen und Aufwand reduziert werden. Besonders vorteilhaft kann diesbezüglich ein Betrieb nach Art eines Zeitmultiplexes vorgesehen sein.

Ferner wird vorgeschlagen, dass in einem jeweiligen Kommunikationszeitraum nur zwei jeweilige Einheiten, insbesondere die Mobileinheit und die Stationseinheit, miteinander kommunizieren. Diese Weiterbildung ermöglicht es, eine Kommunikation zwischen mehreren Mobileinheiten und wenigstens einer Stationseinheit beziehungsweise wenigstens einer Mobileinheit und mehreren Stationseinheiten zu realisieren. Vorzugsweise kann durch individuell zuordenbare Kommunikationszeiträume eine jeweilige Kommunikation zwischen zwei jeweiligen Einheiten erfolgen. Vorzugsweise können auf diese Weise Kommunikationsfenster für die Kommunikation von zwei jeweiligen Einheiten geschaffen werden, die zyklisch wiederholt werden können. Dadurch ist es möglich, nahezu permanent jeweilige Abstände neu zu ermitteln und somit das Bestimmen der jeweiligen Positionen aktuell zu halten. Die Kommunikationszeiträume, die jeweiligen Paaren von Einheiten zugeordnet werden können, können durch ein zentrales Steuersignal vorgegeben sein. Es kann auch vorgesehen sein, dass die jeweiligen Kommunikationszeiträume zumindest teilweise automatisiert zyklisch nach einer vorgegebenen Reihenfolge zeitlich aufeinander folgen. Um eine jeweilige Überwachungsfunktionalität einer jeweiligen Einheit realisieren zu können, kann vorgesehen sein, dass die Kommunikationszeiträume zumindest teilweise zeitlich durch einen jeweiligen Überwachungszeitraum voneinander zeitlich getrennt sind. Die Kommunikationszeiträume weisen vorzugsweise eine im Wesentlichen gleiche zeitliche Erstreckung auf. Bedarfsweise kann die gleiche zeitliche Erstreckung jedoch auch variieren. Es kann ferner vorgesehen sein, dass eine zeitliche Erstreckung des Überwachungszeitraum im Wesentlichen der zeitlichen Erstreckung der Kommunikationszeiträume entspricht.

Gemäß einer Weiterbildung wird vorgeschlagen, dass die Referenzsicherheitsdaten einen datenfreien Abschnitt aufweisen. Mit dem datenfreien Abschnitt kann erreicht werden, dass eine vorgegebene Störung simuliert werden kann. Dadurch ist es möglich, zu testen, ob bei der Sicherheitsfunktion diese Störung zuverlässig als Störung erkannt werden kann. Damit kann also eine Möglichkeit bereitgestellt werden, die Sicherheitsfunktion zuverlässig zu testen. Der datenfreie Abschnitt kann zum Beispiel dadurch realisiert werden, dass die Überwachungseinheit beim Erzeugen der Referenzsicherheitsdaten im datenfreien Abschnitt die Daten beispielsweise unterdrückt oder auch dämpft. Hierzu kann die Überwachungseinheit eine geeignete Schaltung aufweisen, die die gewünschte Funktionalität zu realisieren vermag. Der datenfreie Abschnitt kann zum Beispiel durch eine Lücke in den Daten ohne einen Signalwert beziehungsweise Datenwert gebildet sein. Es können auch mehrere datenfreie Abschnitte vorgesehen sein, die durch datenenthaltende Abschnitte voneinander getrennt sind.

Darüber hinaus wird vorgeschlagen, dass zumindest der datenfreie Abschnitt in den Referenzsicherheitsdaten für unterschiedliche Referenzsignale variiert wird. Damit kann das Verhalten der Sicherheitsfunktion in Bezug auf unterschiedliche Störungen getestet werden. Insbesondere ermöglicht es diese Weiterbildung, die Vergleichsfunktionalität über einen weiten Funktionsbereich, insbesondere den gesamten Funktionsbereich, zu testen. Der datenfreie Abschnitt kann an unterschiedlichen Positionen der Referenzsicherheitsdaten der unterschiedlichen Referenzensignale vorgesehen sein. Der datenfreie Abschnitt kann auch hinsichtlich des Datenumfangs oder einer Länge des datenfreien Abschnitts variieren. So kann vorgesehen sein, dass bei einem Referenzsignal ein kurzer datenfreier Abschnitt vorgesehen ist, wohingegen bei einem anderen Referenzsignal ein längerer datenfreier Abschnitt vorgesehen ist.

Es kann ferner vorgesehen sein, dass die Referenzerwartungsdaten variiert werden. Dies ist beispielsweise dadurch realisierbar, dass die Überwachungseinheit entsprechende Referenzerwartungsdaten für den Vergleich zur Verfügung stellt. Die Referenzerwartungsdaten können beispielsweise mittels der Überwachungseinheit von den Referenzsicherheitsdaten abgeleitet sein. Die Referenzerwartungsdaten können darüber hinaus einen einstellbar vorgebbaren Referenzerwartungswert aufweisen. Der Referenzerwartungswert kann dem Grunde nach zwar dem Erwartungswert, der beispielsweise mittels der Erwartungsdaten bereitgestellt sein kann, entsprechen, gleichwohl kann der Referenzerwartungsdatenwert hiervon auch abweichen, um die Funktion in Bezug auf den Vergleich beziehungsweise die Sicherheitsfunktion besser testen zu können. Die Referenzerwartungsdaten können dem Grunde nach eine Struktur aufweisen, wie sie auch für die Referenzsicherheitsdaten vorgesehen ist. Dem Grunde nach kann die Struktur der Referenzsicherheitsdaten beziehungsweise der Referenzerwartungsdaten der Struktur der Sicherheitsdaten beziehungsweise der Erwartungsdaten im Wesentlichen entsprechen.

Vorzugsweise nutzt das Referenzensignal für die Sicherheitsdaten einen vorgegebenen Sicherheitsdatenbereich, und die Referenzsicherheitsdaten werden zumindest in einem Teil des Sicherheitsdatenbereichs gespeichert. Der vorgegebene Sicherheitsdatenbereich kann wie bei den weiteren Funksignalen angeordnet beziehungsweise strukturiert sein. Vorzugsweise ist das Referenzensignal entsprechend den Funksignalen strukturiert, sodass die Signalverarbeitung durch das Sendes-/Empfangsteil, insbesondere in Bezug auf das Vergleichen, im Wesentlichen in identischer Weise durchgeführt werden kann.

Besonders vorteilhaft erweist es sich, wenn beim Vergleichen der Referenzsicherheitsdaten mit den Referenzerwartungsdaten eine höhere Anforderung als beim Vergleichen der Sicherheitsdaten mit den Erwartungsdaten gestellt wird. Hierbei kann die Erkenntnis genutzt werden, dass die Referenzensignale im Wesentlichen keine Störungen zu enthalten brauchen, wie sie aufgrund einer Funkübertragung auftreten können. Daher kann zum Beispiel ein Referenzsicherheitsdatenerwartungswert in Bezug auf einen Erwartungswert für die Erwartungsdaten entsprechend angepasst sein. Natürlich können die vorgenannten Optionen auch miteinander kombiniert sein.

Darüber hinaus wird vorgeschlagen, dass das Referenzsignal Daten enthält, die es als Referenzsignal kennzeichnen. Das Referenzsignal kann ebenso wie die Funksignale jeweilige Daten enthalten, die das jeweilige Signal entsprechend kennzeichnen. Für das Referenzsignal kann beispielsweise vorgesehen sein, dass in einem bestimmten vorgegebenen Abschnitt des Referenzsignals eine das Referenzsignal identifizierende Zeichenfolge als Daten enthält. Vorzugsweise ist die Zeichenfolge individuell für ein jeweiliges Referenzsignal.

Die Funksignale können vorzugsweise Daten enthalten, die das jeweilige Funksignal als solches kennzeichnen. Beispielsweise können die Funksignale eine individuelle Identifikation des jeweiligen Sende-/Empfangsteils der jeweiligen Einheit enthalten, die das jeweilige Funksignal aussendet. Darüber hinaus kann das jeweilige Funksignal natürlich auch weitere Daten enthalten, beispielsweise Daten in Bezug auf einen Empfangswert, eines zuvor empfangenen Funksignals, einen Sendewert, eines zuvor ausgesendeten Funksignals, Identifikationsdaten der jeweiligen Einheit, die das Funksignal aussendet, Daten in Bezug auf einen Zeitraum zwischen einem Empfang eines Funksignals und dem darauffolgenden Senden des Funksignals und/oder dergleichen. Die Daten können bedarfsweise kodiert sein.

Gemäß einer Weiterbildung wird vorgeschlagen, dass zumindest die Stationseinheit oder die Mobileinheit die Auswerteeinheit aufweist. Besonders vorteilhaft kann vorgesehen sein, dass die Auswerteeinheit sowohl in der Mobileinheit als auch in der Stationseinheit vorgesehen ist. Die Auswerteeinheit braucht dadurch nicht separat beziehungsweise zentral angeordnet zu sein. Dadurch kann Aufwand in Bezug auf die Kommunikation und die Bestimmungsgeschwindigkeit bei der Bestimmung des Abstands verbessert werden. Die Auswerteeinheit kann zum Beispiel zumindest teilweise von einer Steuereinheit der jeweiligen Einheit umfasst sein. Es kann aber auch vorgesehen sein, dass die jeweilige Einheit die Auswerteeinheit als separaten Teil aufweist.

Weiterhin wird vorgeschlagen, dass zumindest die die Überwachungseinheit aufweisende Einheit eine Koppeleinheit zum Koppeln des Antennenanschlusses mit einer Antenneneinheit der die Überwachungseinheit aufweisenden Einheit aufweist, wobei die Überwachungseinheit an der Koppeleinheit angeschlossen ist. Durch die Koppeleinheit kann erreicht werden, dass mittels der Überwachungseinheit die Signallaufzeit innerhalb der jeweiligen Einheit, die die Überwachungseinheit aufweist, geprüft werden kann. Die Signallaufzeit der jeweiligen die Überwachungseinheit aufweisenden Einheit wird vorzugsweise durch eine Signallaufzeit des Sende-/Empfangsteils bestimmt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination sondern auch in anderen Kombinationen verwendbar, ohne den Rahmen der Erfindung zu verlassen.

Darüber hinaus gelten die für das erfindungsgemäße Verfahren angegebenen Vorteile und Wirkungen gleichermaßen auch für das erfindungsgemäße Abstandsbestimmungssystem, die erfindungsgemäße Mobileinheit, die erfindungsgemäße Stationseinheit und umgekehrt. Insofern können Verfahrensmerkmale auch als Vorrichtungsmerkmale und umgekehrt formuliert sein.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale beziehungsweise Funktionen.

Dabei zeigen:
- FIG 1: eine schematische Blockdarstellung eines Abstandsbestimmungssystems mit einer Mobileinheit und einer Stationseinheit,
- FIG 2: eine schematische Darstellung eines Initialsignals,
- FIG 3: eine schematische Darstellung eines Antwortsignals,
- FIG 4: eine schematische Darstellung eines Schlusssignals,
- FIG 5: eine schematische Darstellung eines Signaldiagramms zur Bestimmung eines Abstands zwischen der Mobileinheit und der Stationseinheit gemäß FIG 1 unter Nutzung von Signalen gemäß der Figuren 2 bis 4 in einer ersten Ausgestaltung,
- FIG 6: eine schematische Darstellung eines Signaldiagramms zur fortlaufenden Bestimmung des Abstands zwischen der Mobileinheit und der Stationseinheit gemäß FIG 1 unter Nutzung von Funksignalen basierend auf den Figuren 2 bis 4 in einer zweiten Ausgestaltung,
- FIG 7: eine schematische Blockdarstellung des Abstandsbestimmungssystems basierend auf FIG1, wobei eine interne Funktionsüberwachung für die Mobileinheit und die Stationseinheit vorgesehen ist,
- FIG 8: eine schematische Blockdarstellung der Stationseinheit gemäß FIG 1 mit einer Funktionsüberwachung,
- FIG 9: eine schematische Diagrammdarstellung für eine Ausgestaltung eines Abstandsbestimmungssystems mit mehreren Mobilgeräten und mit mehreren Stationsgeräten, wobei eine Funktionsüberwachung, wie anhand von FIG 8 erläutert, für die Mobilgeräte und die Stationsgeräte vorgesehen ist,
- FIG 10: eine schematische Darstellung eines Referenzsignals, und
- FIG 11: eine schematische Darstellung von unterschiedlichen Referenzsicherheitsdaten in jeweiligen Sicherheitsbereichen von drei unterschiedlichen Referenzsignalen.

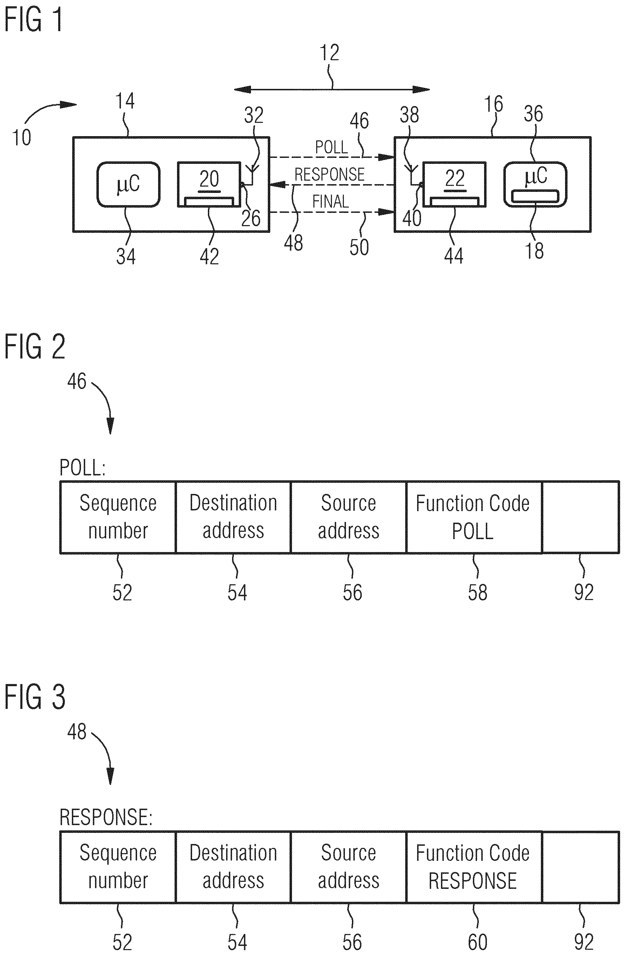

FIG 1 zeigt eine schematische Blockdarstellung eines Abstandsbestimmungssystems 10 mit einer Mobileinheit 14 sowie einer Stationseinheit 16 als zwei Einheiten des Abstandsbestimmungssystems 10. Die Mobileinheit 14 ist als tragbare kompakte Einheit ausgebildet, sodass sie von einem Menschen leicht mitgeführt werden kann. Die Mobileinheit 14 kann beispielsweise nach Art eines Transponders ausgebildet sein.

In FIG 1 ist nicht dargestellt, dass die Mobileinheit 14 eine eigene Energieversorgung aufweist, die unter anderem einen elektrischen Energiespeicher nach Art eines Akkumulators oder dergleichen aufweisen kann. Die Mobileinheit 14 weist ein Steuerteil 34 auf, welches in Kommunikationsverbindung mit einem Sende-/Empfangsteil 20 steht. Das Sende-/Empfangsteil 20 weist ferner einen Antennenanschluss 26 auf, an dem eine Antenneneinheit 32 angeschlossen ist. Das Sende-/Empfangsteil 20 ist ausgebildet, Funksignale über die Antenneneinheit 32 auszusenden und zu empfangen. In dieser Ausgestaltung ist vorgesehen, dass es sich bei den Funksignalen um Funksignale handelt, die den Funkstandard Ultra-Wide-Band (UWB) nutzen. Dieser Funkstandard unterliegt der Normung, weshalb von detaillierten Erläuterungen vorliegend abgesehen wird. Die Erfindung ist jedoch nicht auf die Nutzung von UWB beschränkt und kann auch basierend auf anderen Funkstandards zum Einsatz kommen.

Das Sende-/Empfangsteil 20 weist ferner ein Erfassungsteil 42 auf, welches unter anderem einen Zähler mit einer Zeitbasis aufweist. Mit dem Erfassungsteil 42 ist es möglich, einen Zeitpunkt des Aussendens von Funksignalen durch das Sende-/Empfangsteil 20 der Mobileinheit 14 zu bestimmen. Ebenso ist es mittels des Empfangsteils 42 möglich, einen Zeitpunkt des Empfangens von Funksignalen durch das Sende-/Empfangsteil 20 der Mobileinheit 14 zu bestimmen. In der vorliegenden Ausgestaltung ist vorgesehen, dass mittels des Erfassungsteils 42 jeweilige Zählerstände des Zählers des Erfassungsteils 42 erfasst und zu dem jeweiligen Funksignal zugeordnet gespeichert werden. Zu diesem Zweck weist die Mobileinheit 14 eine nicht weiter dargestellte Speichereinheit auf, die ebenfalls mittels des Steuerteils 34 steuerbar ist beziehungsweise in Kommunikationsverbindung steht.

Die Stationseinheit 16 ist vorliegend an einer fest vorgegebenen Position stationär angeordnet, beispielsweise im Bereich einer Befestigung eines Roboters oder einer anderen Arbeitsmaschine. Die Stationseinheit 16 weist ebenfalls ein Sende-/Empfangsteil 22 auf, welches in Kommunikationsverbindung mit einem Steuerteil 36 steht. Ferner weist das Sende-/Empfangsteil 22 einen Antennenanschluss 40 auf, an dem eine Antenneneinheit 38 angeschlossen ist. Auch das Sende-/Empfangsteil 22 weist ein Erfassungsteil 44 auf, welches dem Grunde nach entsprechend dem Erfassungsteil 42 der Mobileinheit 14 ausgebildet ist. Auch die Stationseinheit 16 ist zum Aussenden und Empfangen von Funksignalen basierend auf dem Funkstandard UWB ausgebildet.

In FIG 1 ist schematisch dargestellt, dass die Mobileinheit 14 und die Stationseinheit 16 über einen Abstand 12 voneinander räumlich beabstandet sind. Dieser Abstand 12 kann, wie im Folgenden noch detaillierter erläutert werden wird, mittels Funksignalen, die zwischen der Mobileinheit 14 und der Stationseinheit 16 ausgetauscht werden, bestimmt werden. Zu diesem Zweck sendet die Mobileinheit 14 ein erstes Funksignal beziehungsweise Initialsignal (englisch: poll-signal) 46 aus, welches von der Stationseinheit 16 empfangen wird. Als Reaktion auf den Empfang des ersten Funksignals 46 sendet die Stationseinheit 16 als zweites Funksignal ein Antwortsignal (englisch: response-signal) 48 aus, welches von der Mobileinheit 14 empfangen wird. Schließlich ist vorzugsweise vorgesehen, dass die Mobileinheit 14 als drittes Funksignal ein Schlusssignal (englisch: final-signal) 50 als drittes Funksignal aussendet, welches von der Stationseinheit 16 empfangen wird. Wie im Folgenden noch weiter erläutert werden wird, kann durch Auswerten der Funksignale und der entsprechenden Zählerstände mittels einer Auswerteeinheit 18 des Steuerteils 36 der Abstand 12 bestimmt werden.

FIG 2 zeigt eine schematische Darstellung des Aufbaus des Initialsignals 46. Das Initialsignal 46 enthält in codierter Form Daten, die sich aus der in FIG 2 dargestellten Struktur ergeben. Das Initialsignal 46 beginnt mit einer "Sequence Number" in einem ersten Signalbereich 52. An den Signalbereich 52 schließt sich ein Signalbereich 54 an, in dem eine Zieladresse für das Initialsignal 46 angegeben ist. An den Signalbereich 54 schließt sich ein Signalbereich 56 an, in dem eine Quellenadresse angegeben ist. Die Zieladresse entspricht vorliegend der Adresse der Stationseinheit 16, wohingegen die Quellenadresse vorliegend der Adresse der Mobileinheit 14 entspricht. An den Signalbereich 56 schließt sich ein Signalbereich 58 an, in dem ein entsprechender Funktionscode in Bezug auf die Initialisierung angegeben ist.

FIG 3 zeigt eine schematische Darstellung des Antwortsignals 48, welches dem Grunde nach ebenso wie das Initialsignal 46 vier aufeinanderfolgende Bereiche hat. Vom Initialsignal 46 unterscheidet sich das Antwortsignal 48 lediglich dadurch, dass anstelle des Signalbereich 58 ein Signalbereich 60 vorgesehen ist, in dem ein entsprechender Funktionscode bezüglich der Antwort angegeben ist.

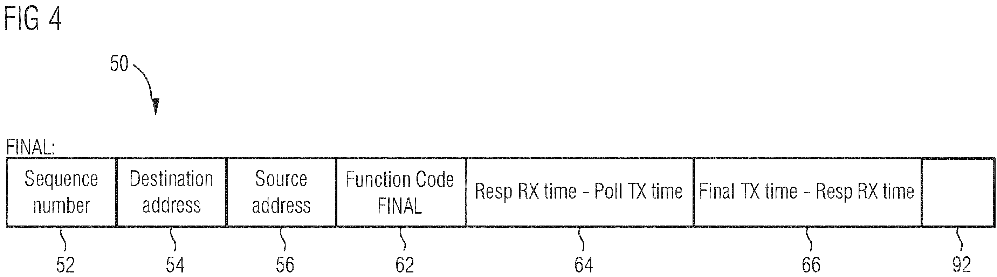

FIG 4 zeigt eine schematische Darstellung des Schlusssignals 50, wie es bei einer Ausgestaltung gemäß FIG 1 vorzugsweise vorgesehen sein kann. Das Schlusssignal 50 unterscheidet sich von dem Initialsignal 46 und dem Antwortsignal 48 dadurch, dass anstelle der Signalbereiche 58, 60 Signalbereiche 62 bis 66 vorgesehen sind. Die Signalbereiche 52 bis 56 entsprechen den Signalbereichen 52 bis 56 des Initialsignals 46 gemäß FIG 2, weshalb von weiteren Erläuterungen hierzu vorliegend abgesehen wird. Der Signalbereich 56 ist von einem Signalbereich 62 gefolgt, in dem ein Funktionscode des Schlusssignals 50 angegeben ist. An den Signalbereich 62 schließt sich ein Signalbereich 64 an, in dem Daten zu einer Zeitdifferenz in Bezug auf den Empfang des Antwortsignals 58 bezüglich des Initialsignals 46 angegeben ist. An den Signalbereich 64 schließt sich ein Signalbereich 66 an, in dem Daten zu einer Zeitdifferenz von einem Sendezeitpunkt des Schlusssignals 50 in Bezug auf den Empfangszeitpunkt des Antwortsignals 48 angegeben sind. Mit dem Schlusssignal 50 werden somit die entsprechenden Daten, die in der Mobileinheit 14 verfügbar sind, an die Stationseinheit 16 übertragen. In der Stationseinheit 16 stehen somit sämtliche Daten zur Verfügung, sodass basierend auf den so ermittelbaren Signallaufzeiten der Funksignale 46, 48, 50 der Abstand 12 mittels der Auswerteeinheit 18 bestimmt werden kann.

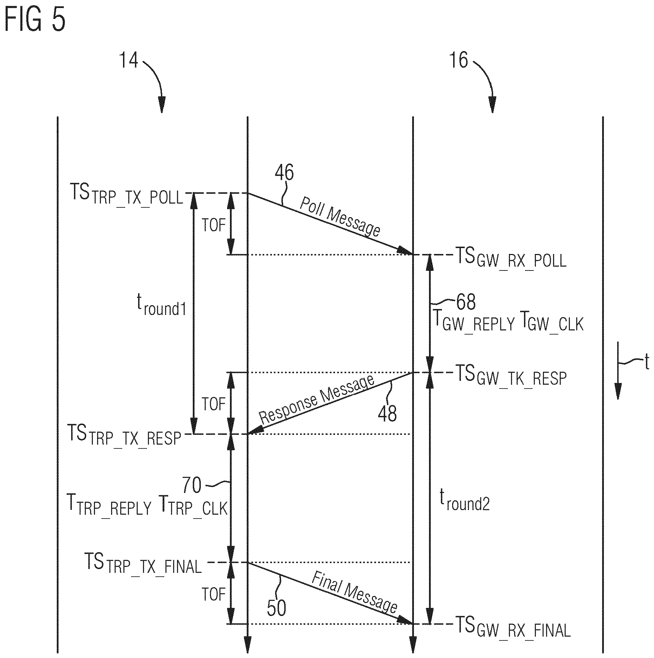

FIG 5 zeigt in einer schematischen Darstellung ein Signaldiagramm zur Bestimmung des Abstands 12 zwischen der Mobileinheit 14 und der Stationseinheit 16 gemäß FIG 1 unter Nutzung von Signalen gemäß der FIG 2 bis 4, wie zuvor im Rahmen einer ersten Ausgestaltung erläutert. Wie aus FIG 5 ersichtlich ist, sendet zunächst die Mobileinheit 14 das Initialsignal 46 aus, welches von der Stationseinheit 16 empfangen wird. Die Mobileinheit 14 erfasst hierzu einen ersten Sendewert, der durch den Zählerstand - wie zuvor erläutert - bestimmt ist. Der erste Sendewert wird abhängig vom Zeitpunkt des Aussendens des Initialsignals 46 durch das Sende-/Empfangsteil 20 der Mobileinheit 14 bestimmt.

Das Initialsignal 46 wird von der Stationseinheit 16 mittels des Sende-/Empfangsteils 22 der Stationseinheit 16 empfangen. Die Stationseinheit 16 erfasst einen ersten Empfangswert, der abhängig von einem Zeitpunkt des Empfangens des Initialsignals 46 durch das Sende-/Empfangsteil 22 der Stationseinheit 16 bestimmt wird. Als Reaktion auf das Empfangen des Initialsignals 46 wird von der Stationseinheit 16 ein Antwortsignal 48 mittels des Sende-/Empfangsteils 22 der Stationseinheit 16 ausgesendet. Die Stationseinheit 16 erfasst einen zweiten Sendewert, der abhängig von einem Zeitpunkt des Aussendens des zweiten Funksignals 48 durch das Sende-Empfangsteil 22 der Stationseinheit 16 bestimmt wird. Das Antwortsignal 48 wird von der Mobileinheit 14 mittels des Sende-/Empfangsteils 20 der Mobileinheit 14 empfangen. Die Mobileinheit 14 erfasst einen zweiten Empfangswert, der abhängig von einem Zeitpunkt des Empfangens des Antwortsignals 48 durch das Sende-/Empfangsteil 20 der Mobileinheit 14 bestimmt wird. Das Aussenden des Antwortsignals 48 erfolgt durch die Stationseinheit 16 nach einer Reaktionszeit 68.

Nach einer Reaktionszeit 70 auf den Empfang des Antwortsignals 48 durch die Mobileinheit 14 sendet die Mobileinheit 14 das Schlusssignal 50, welches von der Stationseinheit 16 empfangen wird. Mit dem Schlusssignal 50 werden unter anderem die erfassten Sende-/Empfangswerte der Mobileinheit 14 an die Stationseinheit 16 übertragen, wie anhand von FIG 4 ersichtlich ist. Es kann somit festgestellt werden, dass in der Stationseinheit 16 nunmehr sämtliche Daten bezüglich der Signale zur Verfügung stehen, sodass unter anderem Signallaufzeiten für die Funksignale 46, 48, 50 (englisch: time of flight; TOF) ermittelt werden können. Dies erfolgt in der Stationseinheit 16 mittels der Auswerteeinheit 18, die vorliegend vom Steuerteil 36 umfasst ist. Die Auswerteeinheit 18 bestimmt unter anderem abhängig vom ersten und zweiten Sendewert sowie abhängig vom ersten und zweiten Empfangswert den Abstand 12 zwischen der Mobileinheit 14 und der Stationseinheit 16.

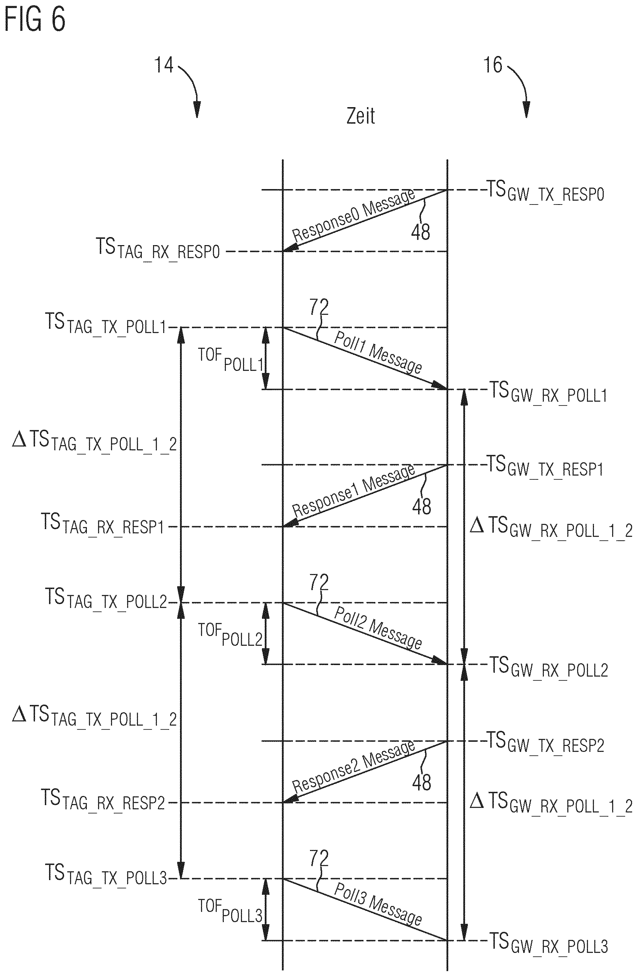

FIG 6 zeigt eine schematische Darstellung eines Signaldiagramms wie FIG 5 zur fortlaufenden Bestimmung des Abstands 12 zwischen der Mobileinheit 14 und der Stationseinheit 16 gemäß FIG 1 unter Nutzung von Funksignalen basierend auf den FIG 2 bis 4 in einer zweiten Ausgestaltung. Wie anhand von FIG 6 ersichtlich ist, unterscheidet sich der Signalablauf gemäß FIG 5 vom Signalablauf gemäß FIG 6 unter anderem dadurch, dass kein Schlusssignal 50 vorgesehen ist. Das Initialsignal 46 gemäß FIG 5 ist durch ein Initialsignal 72 als erstes Signal gemäß FIG 6 ersetzt. Das Initialsignal 72 umfasst vorliegend auch Datenbereiche des Schlusssignals 50. Dadurch ist es weiterhin möglich, erforderliche Daten, insbesondere Sende-/Empfangswerte, der Mobileinheit 14 an die Stationseinheit 16 zu übertragen. Insofern stehen fortlaufend aktualisiert die entsprechenden Sende-/Empfangswerte auf Seiten der Stationseinheit 16 zur Verfügung, sodass die Auswerteeinheit 18 fortlaufend - wie anhand von FIG 5 erläutert - eine Abstandsbestimmung durchführen kann. Der Abstand 12 kann somit zyklisch aktualisiert gehalten werden. Dies ist besonders vorteilhaft bei dynamischen Vorgängen, bei denen sich ein Mensch und/oder die Maschine in einem gemeinsamen Arbeitsbereich bewegen.

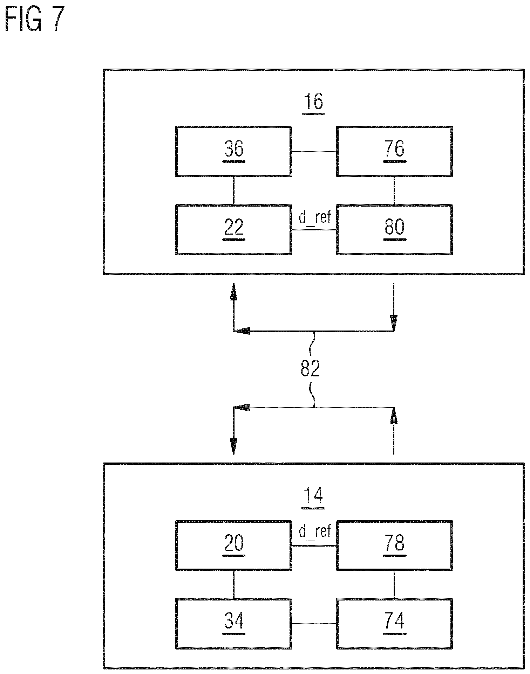

FIG 7 zeigt in einer schematischen Blockdarstellung des Abstandsbestimmungssystems 10 gemäß FIG 1 die Mobileinheit 14 und die Stationseinheit 16, wobei für die Mobileinheit 14 und die Stationseinheit 16 jeweils eine interne Funktionsüberwachung in Bezug auf das Senden und Empfangen von Funksignalen vorgesehen ist. Wie aus FIG 7 ersichtlich ist, sind in Bezug auf die Mobileinheit 14 ergänzend ein Redundanzsteuerteil 74 sowie eine Überwachungseinheit 78 vorgesehen. Die Überwachungseinheit 78 steht mit dem Redundanzsteuerteil 74 in Kommunikationsverbindung. Ferner ist das Redundanzsteuerteil 74 in Kommunikationsverbindung mit dem Steuerteil 34. Die Überwachungseinheit 78 ist ferner mit dem Sende-/Empfangsteil 20 der Mobileinheit 14 gekoppelt.

Entsprechend ist die Stationseinheit 16 ergänzt. Die Stationseinheit 16 weist gegenüber der Stationseinheit 16 gemäß FIG 1 zusätzlich ein Redundanzsteuerteil 76 auf, welches mit dem Steuerteil 36 in Kommunikationsverbindung steht. Darüber hinaus weist die Stationseinheit 16 eine Überwachungseinheit 80 auf, die mit dem Redundanzsteuerteil 76 in Kommunikationsverbindung steht. Weiterhin ist die Überwachungseinheit 80 mit dem Sende-/Empfangsteil 22 der Stationseinheit 16 gekoppelt, wie im Folgenden noch weiter erläutert werden wird.

Die Funktionsüberwachungen für die Mobileinheit 14 und die Steuereinheit 16 sind in der vorliegenden Ausgestaltung im Wesentlichen gleich ausgebildet, weshalb im Folgenden bezüglich der Funktionsüberwachung lediglich die Funktionalität anhand der Stationseinheit 16 erläutert wird. Die entsprechenden Erläuterungen sind jedoch gleichermaßen auch für die Mobileinheit 14 anwendbar.

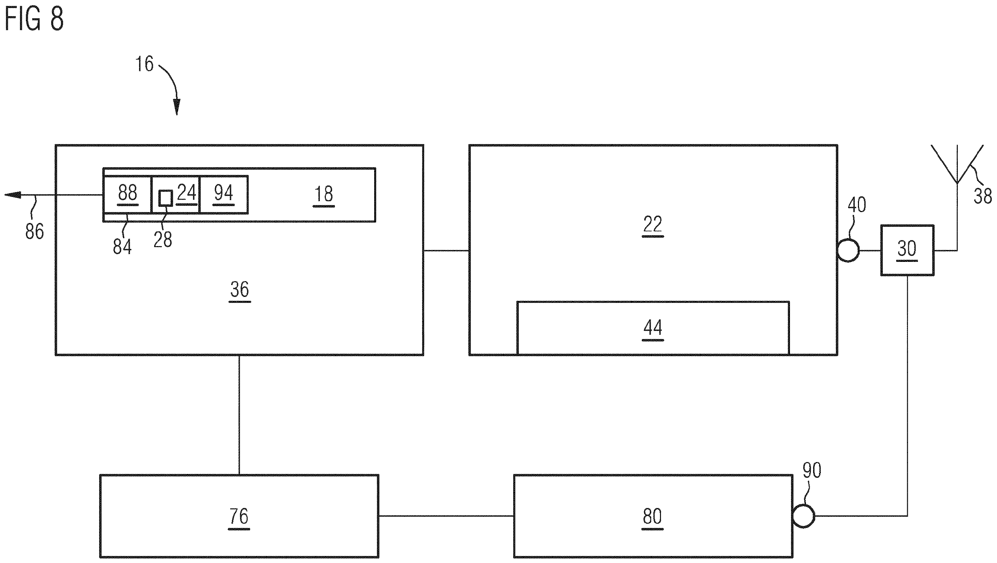

FIG 8 zeigt in einer detaillierteren Darstellung gegenüber FIG 1 eine Stationseinheit 16 mit einer Funktionsüberwachung. Die Stationseinheit 16 weist die Komponenten auf, die bereits für die Stationseinheit 16 anhand von FIG 1 erläutert wurden, weshalb ergänzend auf die diesbezüglichen Ausführungen verwiesen wird. Wie aus FIG 8 ersichtlich ist, ist die Antenneneinheit 38 in dieser Ausgestaltung über eine Koppeleinheit 30 der Stationseinheit 16 mit dem Antennenanschluss 40 gekoppelt. Die Koppeleinheit 30 dient dazu, den Antennenanschluss 40 mit der Antenneneinheit 38 zum Zwecke des Aussendens eines Funksignals beziehungsweise des Empfangens eines Funksignals zu koppeln.

Die Stationseinheit 16 weist ferner ein Redundanzsteuerteil 76 auf, welches kommunikationstechnisch mit dem Steuerteil 36 verbunden ist. Darüber hinaus weist die Stationseinheit 16 eine Überwachungseinheit 80 auf, die mit dem Redundanzsteuerteil 76 in Kommunikationsverbindung steht. Die Überwachungseinheit 80 weist ferner ein separates, nicht weiter dargestelltes Sende-/Empfangsteil auf, welches einen Ausgangsanschluss 90 bereitstellt, der signaltechnisch mit der Koppeleinheit 30 verbunden ist. Dadurch ist es möglich, dass die Überwachungseinheit 80 den Antennenanschluss 40 mit einem Referenzsignal 82 beaufschlagen kann. Darüber hinaus ist es möglich, dass, wenn das Sende-/Empfangsteil 22 ein Referenzsignal 82 am Antennenanschluss 40 abgibt, das Referenzsignal 82 über die Koppeleinheit 30 von der Überwachungseinheit 80 empfangen werden kann. Dies wird im Folgenden noch weiter erläutert. Die Koppeleinheit 30 ermöglicht es somit, das Sende-/Empfangsteil 22 bedarfsweise mit der Antenneneinheit 38 beziehungsweise der Überwachungseinheit 80 signaltechnisch zu verbinden. Dies ermöglicht es, die Funktion des Sende-/Empfangsteils 22 sowie zumindest teilweise die Funktion des Steuerteils 36 zu überwachen.

In einer ersten Ausgestaltung zur Funktionsüberwachung ist vorgesehen, dass die Überwachungseinheit 80 des Abstandsbestimmungssystems 10 ein Referenzsignal 82 erzeugt. Zu diesem Zweck gibt das Redundanzsteuerteil 76 ein entsprechendes nicht dargestelltes Generatorsignal an die Überwachungseinheit 80 ab. Die Überwachungseinheit 80 erzeugt das Referenzsignal 82 und gibt das Referenzsignal 82 an den Antennenanschluss 40 des Sende-/Empfangsteils 22 der die Überwachungseinheit 80 aufweisenden Einheit, hier die Stationseinheit 16, ab. Zu diesem Zweck wird das Referenzsignal 82 am Anschluss 90 über die Koppeleinheit 30 an den Antennenanschluss 40 abgegeben.

Die Stationseinheit 16 erfasst einen entsprechenden Referenzsendewert, der abhängig von einem Zeitpunkt des Abgebens des Referenzsignals 82 an den Antennenanschluss 40 bestimmt wird. Im vorliegenden Fall ist vorgesehen, dass der Referenzsendewert mittels der Überwachungseinheit 80 erfasst und an das Referenzsteuerteil 76 übermittelt wird. Zu diesem Zweck kann vorgesehen sein, dass die Überwachungseinheit 80 eine eigene entsprechende Erfassungseinheit oder die Erfassungseinheit 44 des Sende-/Empfangsteils 22 nutzt.

Das Referenzsignal 82 wird von dem Sende-/Empfangsteil 22 der Stationseinheit 16 empfangen. Die Stationseinheit 16 erfasst hierzu einen Referenzempfangswert, und zwar im vorliegenden Fall entsprechend der Erfassung von Empfangswerten für Initialsignale 46. Der Referenzempfangswert wird abhängig von einem Zeitpunkt des Empfangens des Referenzsignals 82 durch das Sende-/Empfangsteil 22 der Stationseinheit 16 bestimmt. Der Referenzempfangswert wird an das Steuerteil 36 übermittelt. Ebenso übermittelt das Redundanzsteuerteil 76 den Referenzsendewert an das Steuerteil 36. Im Steuerteil 36 stehen somit die erforderlichen Werte zum Bestimmen eines Referenzabstands 28 zur Verfügung.

Zu diesem Zweck weist die Auswerteeinheit 18 einen Referenzauswertungsbereich 84 auf. Der Referenzauswertungsbereich 84 weist ein Referenzabstandermittlungsteil 24 auf, welches den Referenzabstand 28 aus den zur Verfügung gestellten Werten für den Referenzsendewert und den Referenzempfangswert ermittelt. Der Referenzabstand 28 wird dann einer Vergleichseinheit 88 des Referenzauswertungsbereichs 84 zugeführt, die den Referenzabstand 28 mit einem nicht weiter dargestellten vorgegebenen Vergleichswert vergleicht. In dieser Ausgestaltung stellt der Vergleichswert ein Toleranzband dar.

Ergibt der Vergleich, dass der Vergleichswert innerhalb des Toleranzbands ist, wird dies als bestimmungsgemäße Funktion der Stationseinheit 16 gewertet. Ergibt sich anhand des Vergleichs jedoch ein Vergleichswert, der außerhalb des Toleranzbands liegt, gibt der Referenzauswertungsbereich 84 ein entsprechendes Meldesignal 86 ab. Das Meldesignal 86 kann an eine übergeordnete Steuerung abgegeben werden, die dieses Signal auswertet und abhängig vom Auswerten eine Störung im Bereich der Abstandsbestimmung durch das Abstandsbestimmungssystem 10 feststellt. Abhängig vom Meldesignal 86 kann die übergeordnete Steuerung weitere Maßnahmen veranlassen.

Die Stationseinheit 16 kann jedoch alternativ oder ergänzend auch gemäß einer zweiten Ausgestaltung zur Funktionsüberwachung genutzt werden. Zu diesem Zweck ist in dieser Ausgestaltung vorgesehen, dass die Überwachungseinheit 80 ein Referenzsignal 82 empfängt. Mittels des Sende-/Empfangsteils 22 der Stationseinheit 16 wird das Referenzsignal 82 am Antennenanschluss 40 des Sende-/Empfangsteils 22 der Stationseinheit 16 abgegeben. Die Stationseinheit 16 erfasst einen Referenzsendewert, so wie dies zu den vorigen Beispielen bereits erläutert wurde. Zu diesem Zweck kann die Referenzsendewerterfassung mittels der Erfassungseinheit 44 in der gleichen Weise erfolgen, wie das Erfassen des Sendewerts für das Antwortsignal 48 gemäß den obigen Ausführungen. Der Referenzsendewert wird abhängig von einem Zeitpunkt des Abgebens des Referenzsignals 82 durch das Sende-/Empfangsteil 22 bestimmt.

Das Referenzsignal 82 wird von der Überwachungseinheit 80 empfangen, wobei die Überwachungseinheit 80 einen Referenzempfangswert erfasst, der abhängig von einem Zeitpunkt des Empfangens des Referenzsignals 82 durch die Überwachungseinheit 80 bestimmt wird. Dies kann auf die gleiche Weise erfolgen, wie es für die Funksignale zuvor bereits erläutert wurde. Der Referenzsendewert wird von dem Sende-/Empfangsteil 22 an das Steuerteil 36 übermittelt. Entsprechend wird der Referenzempfangswert von der Überwachungseinheit 80 an das Redundanzsteuerteil 76 und schließlich ebenfalls an das Steuerteil 36 übermittelt. Auch hier stehen nun die entsprechenden Referenzwerte zur Verfügung, um - wie bereits zuvor erläutert - mittels der Auswerteeinheit 18, insbesondere des Referenzauswertungsbereichs 84, die erforderliche Bestimmung des Referenzabstands 28 und den sich daran anschließenden Vergleich durchzuführen. Die weitere Verfahrensführung kann daher dem Grunde nach identisch wie zuvor erläutert erfolgen.

Alternativ oder ergänzend zur zuvor erläuterten Ausgestaltung kann darüber hinaus vorgesehen sein, dass für die Funktionsüberwachung kein separates Referenzsignal 82 genutzt wird, sondern, im vorliegenden Fall der Stationseinheit 16, das Antwortsignal 48. Wie zu den FIG 1 bis 6 erläutert, wird das entsprechende Funksignal, hier das Antwortsignal 48, am Antennenanschluss 40 des Sende-/Empfangsteils 22 der Stationseinheit 16 bereitgestellt. Über die Koppeleinheit 30 kann das Antwortsignal 48 auch von der Überwachungseinheit 80 empfangen werden. Die Überwachungseinheit 80 erfasst diesbezüglich wieder einen Referenzempfangswert, der abhängig von einem Zeitpunkt des Empfangens des Antwortsignals 48 durch die Überwachungseinheit 80 bestimmt wird. Der Referenzempfangswert wird an das Redundanzsteuerteil 76 und schließlich an das Steuerteil 36 übermittelt, sodass mittels des Referenzauswertungsbereichs 84 abhängig vom Referenzempfangswert und dem Sendewert in Bezug auf das Antwortsignal 48 die vorgenannte Signalverarbeitung zum Ermitteln des Referenzabstands erfolgen kann. Die weitere Verarbeitung erfolgt dann wie bereits zu den vorhergehenden beiden Ausgestaltungen erläutert.

Aus FIG 8 ist ferner ersichtlich, dass die Auswerteeinheit 18 eine 94 aufweist. Dem Grunde nach kann die Sicherheitsvergleichseinheit 94 jedoch zumindest teilweise auch im Sende-/Empfangsteil 22 angeordnet sein. In der vorliegenden Ausgestaltung ist vorgesehen, dass die Mobileinheit 14 und die Stationseinheit 16 ausgebildet sind, dem jeweils auszusendenden Funksignal 46, 48 Sicherheitsdaten hinzuzufügen. Zu diesem Zweck weisen die Funksignale 46, 48, 50 jeweilige Sicherheitsbereiche 92 auf, in denen die Mobileinheit 14 beziehungsweise die Stationseinheit 16 die Sicherheitsdaten anordnen können, sodass diese mittels des jeweiligen Funksignals 46, 48, 50 ausgesendet werden. Die Mobileinheit 14 und die Stationseinheit 16 sind ferner ausgebildet, die Sicherheitsdaten aus einem jeweiligen empfangenen Funksignal 46, 48 auszulesen und mit jeweiligen vorgegebenen Erwartungsdaten zu vergleichen. Dadurch ist es möglich, die Integrität der Funksignale zu überprüfen und bei einer Beschädigung der Daten die Abstandsbestimmung zu unterdrücken. Entsprechend ist die Auswerteeinheit 18 ausgebildet, abhängig vom Vergleichen der Sicherheitsdaten mit den Erwartungsdaten den Abstand 12 zwischen der Mobileinheit 14 und der Stationseinheit 16 abhängig vom ersten und zweiten Sendewert sowie abhängig vom ersten und zweiten Empfangswert zu bestimmen. Dies ermöglicht es, Fehler bei der Abstandsbestimmung durch das Abstandsbestimmungssystem zu reduzieren oder sogar zu vermeiden.

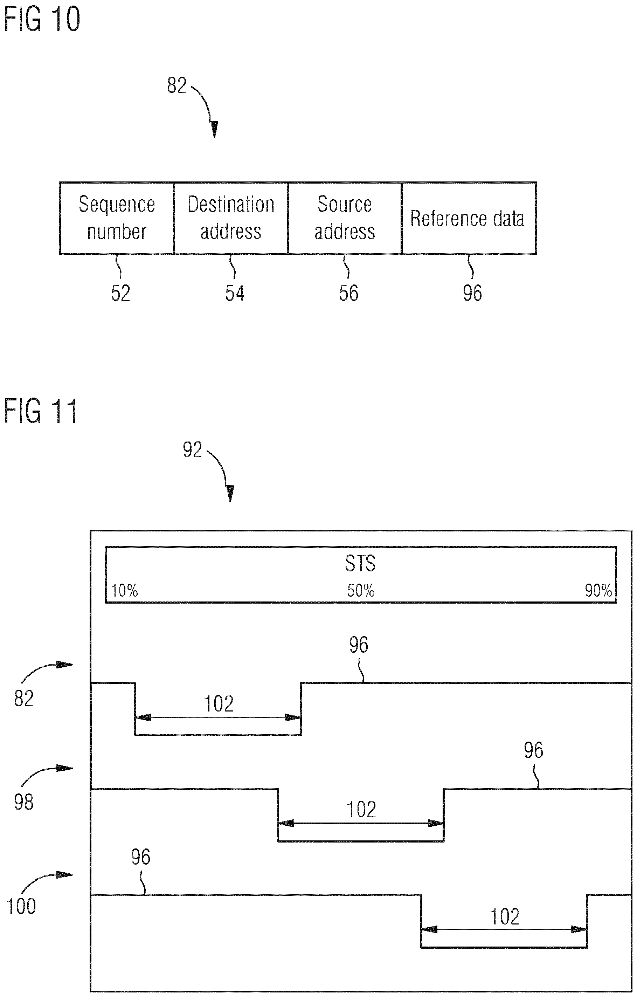

Um diese Funktionalität überprüfen zu können, ist vorliegend vorgesehen, dass sowohl Mobileinheit 14 als auch die Stationseinheit 16 jeweils eine Überwachungseinheit 78, 80 aufweisen, die ausgebildet ist, ein Referenzsignal 82 mit Referenzsicherheitsdaten 96 zu erzeugen (FIG 10). Die Überwachungseinheiten 78, 80 sind ferner ausgebildet, das Referenzsignal 82 an den Antennenanschluss 26, 40 des jeweiligen Sende-/Empfangsteils 20, 22 abzugeben. Das heißt, dass das Referenzsignal 82 nicht über Funk ausgesendet wird. Das jeweilige Sende-/Empfangsteil 20, 22 ist ausgebildet, das Referenzsignal 82 zu empfangen, die Referenzsicherheitsdaten 96 aus dem Referenzsignal 82 auszulesen, und die ausgelesenen Referenzsicherheitsdaten 96 mit vorgegebenen Referenzerwartungsdaten zu vergleichen. Dies kann zum Beispiel dadurch realisiert sein, das Impulse darstellende Bits einer die Referenzsicherheitsdaten 96 bildenden Bitfolge mit einer Referenzerwartungsdaten bildenden Bitfolge vergleichen und Abweichungen mit einem Referenzerwartungswert verglichen werden. Solange der Vergleich ergibt, dass die Abweichungen kleiner als der Referenzerwartungswert sind, wird dies als im Wesentlichen störungsfrei gewertet. Sind hingegen die Abweichungen größer als der Referenzerwartungswert, wird dies als Störung gewertet und es wird das Meldesignal 86 abgegeben. Auf diese Weise kann die Funktionstüchtigkeit der jeweiligen Einheit 14, 16 mittels der Auswerteeinheit 18 abgeschätzt werden. Aufgrund des Meldesignals kann ein Deaktivieren der jeweiligen Einheit 14, 16 vorgesehen sein. Das heißt, dass das Bestimmen des Abstands 12 nur erfolgt, solange eine im Wesentlichen störungsfreie Funktion vorliegt. Beispielsweise kann mit dem Meldesignal 86 folglich die Abstandsbestimmung bedarfsweise unterdrückt werden.

FIG 11 zeigt ferner eine schematische Darstellung von unterschiedlichen Referenzsicherheitsdaten 96 in jeweiligen Sicherheitsbereichen 92 von drei unterschiedlichen Referenzsignalen 82, 98, 100. Die Referenzsicherheitsdaten 96 der drei Referenzsignale 82, 98, 100 weisen jeweilige Bitfolgen auf, die vorliegend individuell für jedes der Referenzsignale 82, 98, 100 sind. Die Bitfolgen selbst sind nicht dargestellt, sondern nur Bereiche, in denen die Bitfolgen vorliegen. Die Referenzsicherheitsdaten 96 der drei Referenzsignale 82, 98, 100 weisen jeweilige datenfreie Abschnitte 102 auf, in denen die Daten unterdrückt sind. Die Überwachungseinheiten 78, 80 sind entsprechend ausgebildet, damit die Referenzsicherheitsdaten 96 entsprechend bereitgestellt werden können.

Die Referenzsicherheitsdaten 96 der drei Referenzsignale 82, 98, 100 unterscheiden sich dadurch, dass die datenfreien Abschnitte 102 an voneinander unterschiedlichen Position ausgebildet sind. Dies ermöglicht es, unterschiedliche Abschnitte bei der entsprechenden Vergleichsfunktion zu testen. So können die Referenzsignale 82, 98, 100 zum Beispiel zeitlich nacheinander bereitgestellt werden, um die jeweilige Funktion der jeweiligen Sicherheitsvergleichseinheit 94 zu testen. Wird eine Störung festgestellt, kann auch hier das Meldesignal 86 abgegeben werden. Darüber hinaus ist in einer weiteren Ausgestaltung vorgesehen, dass ergänzend auch der Erwartungswert für diesen Vergleich variiert wird. Die Referenzerwartungsdaten können einen entsprechenden Referenzerwartungserwartungswert aufweisen, mit dem die Funktion des Vergleichs angepasst werden kann. Dadurch kann eine umfangreiche Testfunktion bereitgestellt werden. Die Referenzerwartungsdaten werden vorliegend von der jeweiligen Überwachungseinheit 78, 80 bereitgestellt.

Insgesamt kann mit den vorgenannten Ausgestaltungen erreicht werden, dass eine Überwachungsfunktionalität in Bezug auf eine Funktionsüberwachung der Stationseinheit 16 zumindest teilweise realisiert werden kann. Die Erfindung ist jedoch nicht darauf beschränkt, nur die Stationseinheit 16 zu überwachen. Sie kann in analoger Weise natürlich bei der Mobileinheit 14 angewendet werden. Zu diesem Zweck kann vorgesehen sein, dass die Mobileinheit 14 Referenzsendewerte und/oder Referenzempfangswerte an die Stationseinheit 16 übermittelt und diese die Auswertung in Bezug auf den Referenzabstand 28 und den Vergleich durchführt. Es kann aber auch vorgesehen sein, dass die Mobileinheit 14 zumindest eine eigene Referenzauswertungseinheit 84 aufweist. Das Meldesignal 86 kann dann von der Mobileinheit 14 zum Beispiel unmittelbar an die übergeordnete Steuerung oder auch an die Stationseinheit 16 übermittelt werden. Dies ermöglicht es, nicht nur die Mobileinheit 14, sondern auch die Stationseinheit 16 in die Funktionsüberwachung zu integrieren.

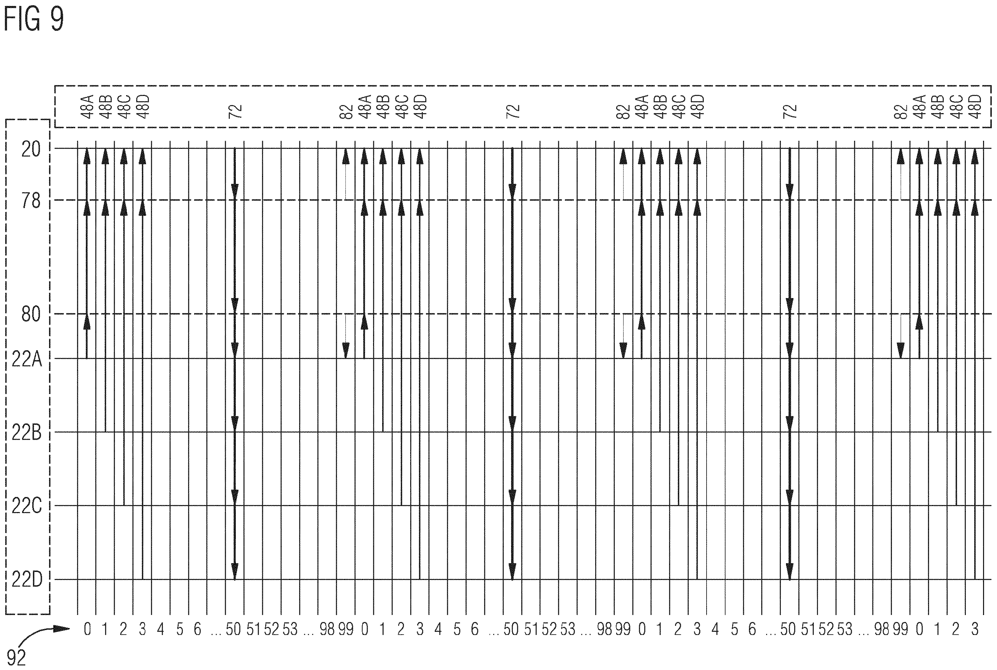

FIG 9 zeigt eine schematische Diagrammdarstellung für eine Ausgestaltung eines Abstandsbestimmungssystems 10 mit mehreren Mobilgeräten 14 und mit mehreren Stationsgeräten 16. Es ist eine Funktionsüberwachung für die Mobilgeräte 14 und die Stationsgeräte 16 vorgesehen, wie sie anhand von FIG 8 für die Stationsgeräte 16 erläutert ist. Das Signaldiagramm gemäß FIG 9 zeigt exemplarisch Signalverläufe für eine Mobileinheit 14 in Verbindung mit vier voneinander beabstandet angeordneten Stationseinheiten 16. Die Mobileinheit 14 und die Stationseinheiten 16 sind gemäß des anhand von FIG 7 erläuterten Konstruktion ausgerüstet.

Die Kommunikation zwischen der dargestellten Mobileinheit 14 und den Stationseinheiten 16 erfolgt, wie anhand von FIG 6 erläutert. Das heißt, es erfolgt eine fortlaufende Kommunikation zwischen den Einheiten 14, 16, wobei die Kommunikation vorliegend kein Schlusssignal 50 umfasst. Stattdessen ist für die Kommunikation das Initialsignal 72 vorgesehen. Die Signalverarbeitung erfolgt wie insbesondere anhand von FIG 6 erläutert.

Vorliegend ist vorgesehen, dass das Aussenden und Empfangen des Initialsignals 72 und der entsprechenden Antwortsignale 48 in jeweiligen vorgegeben, zeitlich aufeinander folgenden Kommunikationszeitträumen stattfindet. Den Kommunikationszeiträumen ist eine jeweilige individuelle Kanalnummer 92 zugeordnet. In der vorliegenden Ausgestaltung ist vorgesehen, dass die auf dieser Weise im Zeitmultiplex realisierte Kommunikation 100 Kommunikationszeiträume aufweist, die mit Kanalnummern 92 von 0 bis 99 nummeriert sind. In jedem der Kommunikationszeiträume wird nur ein jeweiliges Funksignal 48, 72 übermittelt. Mit der Kanalnummer 99 ist ein Überwachungszeitraum vorgegeben, der in der vorliegenden Ausgestaltung hinsichtlich der zeitlichen Erstreckung der der Kommunikationszeiträume entspricht. Die Kommunikationszeiträume weisen vorliegend den gleichen Zeitraum auf. Das zuvor erläuterte Abgeben und Empfangen des Referenzsignals 82 sowie das zugehörige Auswerten und Vergleichen erfolgt in einem jeweiligen Überwachungszeitraum mit der Kanalnummer 99, wobei der Überwachungszeitraum zeitlich zwischen zwei aufeinander folgenden Kommunikationszeiträumen ist, und zwar vorliegend zwischen dem Kommunikationszeitraum 98 und dem Kommunikationszeitraum 0. Das Abstandsbestimmungssystem 10 ist diesbezüglich entsprechend ausgebildet, sodass die Koppeleinheit abhängig vom Überwachungszeitraum betrieben wird.

FIG 9 zeigt einen Ausschnitt aus der Kommunikation zwischen den Einheiten 14, 16, wie anhand von FIG 6 erläutert. In einem jeweiligen Kommunikationszeitraum mit der Kanalnummer 50 sendet die Mobileinheit 14 mittels des Sende-/Empfangsteils 20 ein Initialsignal 72 aus. Das Initialsignal 72 wird von den Stationseinheiten 16 mittels der jeweiligen Sende-/Empfangsteile 22 empfangen, die vorliegend in FIG 9 in dieser Ausgestaltung mit den Bezugszeichen 22A, 22B, 22C und 22D gekennzeichnet sind. Somit steht das Initialsignal 72 in jeder der Stationseinheiten 16 zur Verfügung. Folglich wird das Initialsignal 72 vom Sende-/Empfangsteil 22A der ersten Stationseinheit 16, vom Sende-/Empfangsteil 22B der zweiten Stationseinheit 16, vom Sende-/Empfangsteil 22C der dritten Stationseinheit 16 sowie vom Sende-/Empfangsteil 22D der vierten Stationseinheit 16 empfangen. Es ist also für das Senden des Initialsignals 72 genau ein fest vorgegebener Kommunikationszeitraum bestimmt.

Für das Senden der Antwortsignale 48 sind ebenfalls fest vorgegebene Kommunikationszeiträume bestimmt, und zwar in der vorliegenden Ausgestaltung die Kommunikationszeiträume mit den Kanalnummern 0 bis 3. Für die erste Stationseinheit 16 ist der Kommunikationszeitraum mit der Kanalnummer 0 vorgesehen. In diesem Zeitraum sendet das Sende-/Empfangsteil 22A sein Antwortsignal 48A. Im darauffolgenden Kommunikationszeitraum mit der Kanalnummer 1 sendet das Sende-/Empfangsteil 22B der zweiten Stationseinheit 16 sein Signal 48B. Daran schließt sich der der dritten Stationseinheit 16 zugeordnete Kommunikationszeitraum mit der Kanalnummer 2 an, in dem das Sende-/Empfangsteil 22C sein Antwortsignal 48C sendet. Entsprechend sendet das Sende-/Empfangsteil 22D der vierten Stationseinheit 16 sein Antwortsignal 48D im Kommunikationszeitraum mit der Kanalnummer 3. Die Signalverarbeitung erfolgt im Grunde nach wie bereits zuvor erläutert, sodass das folgende Initialsignal 72 die entsprechenden Sende-/Empfangswerte der Mobileinheit 14 an die Stationseinheiten 16 übermittelt.

In der vorliegenden Ausgestaltung ist vorgesehen, dass die erste Stationseinheit 16 als Master für die Zuordnung der Kommunikationszeiträume fungiert. Dadurch ist die Kommunikation, insbesondere die Zuordnung der Kommunikationszeiträume zu den jeweiligen Stationseinheit en 16, vorliegend bestimmt.

Im Überwachungszeitraum mit der Kanalnummer 99 ist sowohl für die Mobileinheit 14 als auch für die erste Stationseinheit 16 die Durchführung der zuvor erläuterten Funktionsüberwachung vorgesehen. Entsprechend werden an dieser Stelle intern an der jeweiligen Einheit 14, 16 die jeweiligen Referenzsignale 82 erzeugt, intern versendet, empfangen und weiterverarbeitet, um die jeweiligen Referenzabstände 28 zu ermitteln. Darüber hinaus werden die jeweiligen Vergleiche durchgeführt und gegebenenfalls die Meldesignale 86 abgegeben.

Auch wenn in der vorliegenden Ausgestaltung gemäß FIG 9 vorgesehen ist, dass lediglich die erste Stationseinheit 16 die Funktionsüberwachung durchführt, kann die Funktionsüberwachung natürlich auch für eine oder mehrere oder alle der weiteren Stationseinheiten 16 entsprechend vorgesehen sein. Diese kann dann ebenfalls im Überwachungszeitraum mit der Kanalnummer 99 durchgeführt werden.

Aus FIG 9 ist ferner ersichtlich, dass die Kommunikationszeiträume mit den Kanalnummern 4 bis 49 sowie 51 bis 98 aktuell nicht belegt sind. Es besteht daher die Möglichkeit, diese Kommunikationszeiträume zu nutzen, um eine Kommunikation zu einer weiteren oder mehreren weiteren Mobileinheiten 14 durchzuführen. Die Kommunikation kann entsprechend wie zuvor erläutert erfolgen.

Bei der Ausgestaltung gemäß FIG 9 ist es möglich, die Position der Mobileinheit 14 im Raum zu bestimmen. Zu diesem Zweck kann genutzt werden, dass die Stationseinheiten 16 vorgegebene Positionen aufweisen. Beispielsweise mittels Trilateration kann dann die genaue Position der Mobileinheit 14 bestimmt werden. Zu diesem Zweck können die jeweiligen Abstände 12 der Mobileinheit 14 zu den jeweiligen Stationseinheiten 16 bestimmt und weiterverarbeitet werden. Die Ausgestaltung ermöglicht es daher, die genaue Position des die Mobileinheit 14 mitführenden Menschen im Raum oder in der Ebene zu bestimmen. Dies ist besonders vorteilhaft, wenn sich der Mensch im Arbeitsbereich einer im bestimmungsgemäßen Betrieb befindlichen Maschine oder eines autonomen geführten Fahrzeugs ist. So ist es zum Beispiel möglich, dass eine übergeordnete Steuerung relevante Positionen der Maschine beziehungsweise des autonom geführten Fahrzeugs mit der wie zuvor erläutert bestimmten Position des Menschen verarbeitet, um eine Gefährdung des Menschen zu bestimmen und abhängig von einem Gefährdungspotential gegebenenfalls steuernd auf die Maschine beziehungsweise das autonom geführte Fahrzeug einzuwirken.

Durch die Erfindung kann also erreicht, werden das Sicherheitsstandards besser eingehalten werden können, sodass Maschinen bzw. autonom geführte Fahrzeuge mit größeren Geschwindigkeiten betrieben werden können.

Die Ausführungsbeispiele dienen ausschließlich der Erläuterung der Erfindung und sollen diese nicht beschränken.

### Bezugszeichenliste

- 10: Abstandsbestimmungssystem
- 12: Abstand
- 14: Mobileinheit
- 16: Stationseinheit
- 18: Auswerteeinheit
- 20: Sende-/Empfangsteil
- 22: Sende-/Empfangsteil
- 24: Referenzabstandermittlungsteil
- 26: Antennenanschluss
- 28: Referenzabstand
- 30: Koppeleinheit
- 32: Antenneneinheit
- 34: Steuerteil
- 36: Steuerteil
- 38: Antenneneinheit
- 40: Antennenanschluss
- 42: Erfassungsteil
- 44: Erfassungsteil
- 46: erstes Funksignal
- 48: zweites Funksignal
- 50: drittes Funksignal
- 52 bis 66: Signalbereich
- 68: Reaktionszeit
- 70: Reaktionszeit
- 72: erstes Funksignal
- 74: Redundanzsteuerteil
- 76: Redundanzsteuerteil
- 78: Überwachungseinheit
- 80: Überwachungseinheit
- 82: Referenzsignal
- 84: Referenzauswertungsbereich
- 86: Meldesignal
- 88: Vergleichseinheit
- 90: Anschluss
- 92: Sicherheitsbereich
- 94: Sicherheitsvergleichseinheit
- 96: Referenzsicherheitsdaten
- 98: Referenzsignal
- 100: Referenzsignal
- 102: datenfreier Abschnitt

## Patentansprüche

1. Verfahren zum Betreiben eines Abstandsbestimmungssystems (10), welches dazu dient, zumindest einen Abstand (12) zwischen wenigstens zwei Einheiten (14, 16) des Abstandsbestimmungssystems (10), welche eine Mobileinheit (14) und eine Stationseinheit (16) aufweisen, unter Nutzung von Funk zu bestimmen, wobei die Mobileinheit (14) und die Stationseinheit (16) an zwei voneinander unterschiedlichen Positionen angeordnet sind, wobei
- von der Mobileinheit (14) ein erstes Funksignal (46) mittels eines Sende-/Empfangsteils (20) der Mobileinheit (14) ausgesendet wird, wobei die Mobileinheit (14) einen ersten Sendewert erfasst, der abhängig von einem Zeitpunkt des Aussendens des ersten Funksignals (46) durch das Sende-/Empfangsteil (20) der Mobileinheit (14) bestimmt wird,
- das erste Funksignal (46) von der Stationseinheit (16) mittels eines Sende-/Empfangsteils (22) der Stationseinheit (16) empfangen wird, wobei die Stationseinheit (16) einen ersten Empfangswert erfasst, der abhängig von einem Zeitpunkt des Empfangens des ersten Funksignals (46) durch das Sende-/Empfangsteil (22) der Stationseinheit (16) bestimmt wird,
- von der Stationseinheit (16) als Reaktion auf das Empfangen des ersten Funksignals (46) ein zweites Funksignal (48) mittels des Sende-/Empfangsteils (22) der Stationseinheit (16) ausgesendet wird, wobei die Stationseinheit (16) einen zweiten Sendewert erfasst, der abhängig von einem Zeitpunkt des Aussendens des zweiten Funksignals (48) durch das Sende-/Empfangsteil (22) der Stationseinheit (16) bestimmt wird,
- das zweite Funksignal (48) von der Mobileinheit (14) mittels dem Sende-/Empfangsteil (20) der Mobileinheit (14) empfangen wird, wobei die Mobileinheit (14) einen zweiten Empfangswert erfasst, der abhängig von einem Zeitpunkt des Empfangens des zweiten Funksignals (48) durch das Sende-/Empfangsteil (20) der Mobileinheit (14) bestimmt wird,
- wobei die das jeweilige Funksignal (46, 48) aussendende Einheit (14, 16) Sicherheitsdaten im Funksignal (46, 48) hinzufügt,
- wobei die das jeweilige Funksignal (46, 48) empfangende Einheit (14, 16) die Sicherheitsdaten aus dem Funksignal (46, 48) ausliest und zumindest teilweise mit vorgegebenen Erwartungsdaten vergleicht,
- abhängig vom Vergleichen der Sicherheitsdaten mit den Erwartungsdaten mittels einer Auswerteeinheit (18) der Abstand (12) zwischen der Mobileinheit (14) und der Stationseinheit (16) ferner zumindest abhängig vom ersten und zweiten Sendewert sowie abhängig vom ersten und zweiten Empfangswert bestimmt wird,
**dadurch gekennzeichnet, dass**
- wenigstens eine Überwachungseinheit (78, 80) des Abstandsbestimmungssystems (10) ein Referenzsignal (82) mit Referenzsicherheitsdaten (96) erzeugt,
- die Überwachungseinheit (78, 80) das Referenzsignal (82) an einen Antennenanschluss (26, 40) des Sende-/Empfangsteils (22) der die Überwachungseinheit (78, 80) aufweisenden Einheit (16) abgibt,
- das Referenzsignal (82) von dem Sende-/Empfangsteil (22) der die Überwachungseinheit (78, 80) aufweisenden Einheit (16) empfangen wird,
- abhängig vom Vergleichen der Referenzsicherheitsdaten (96) mit vorgegebenen Referenzerwartungsdaten der die Überwachungseinheit (78, 80) aufweisenden Einheit (16) eine Funktionstüchtigkeit der die Überwachungseinheit (78, 80) aufweisenden Einheit (16) abgeschätzt wird.

2. Verfahren nach Anspruch 1, **dadurch gekennzeichnet, dass** das Aussenden und Empfangen der ersten und der zweiten Funksignale (46, 48) in jeweiligen vorgegebenen, zeitlich voneinander beabstandeten Kommunikationszeiträumen stattfindet, wobei das Abgeben und Empfangen des Referenzsignals (82) sowie das zugehörige Auswerten und Vergleichen in einem jeweiligen Überwachungszeitraum erfolgt, der zeitlich zwischen zwei aufeinanderfolgenden Kommunikationszeiträumen ist.

3. Verfahren nach einem der vorhergehenden Ansprüche, **dadurch gekennzeichnet, dass** in einem jeweiligen Kommunikationszeitraum nur jeweils zwei Einheiten (14, 16), insbesondere die Mobileinheit (14) und die Stationseinheit (16), miteinander kommunizieren.

4. Verfahren nach einem der vorhergehenden Ansprüche, **dadurch gekennzeichnet, dass** das Referenzsignal (82) Daten enthält, die es als Referenzsignal (82) kennzeichnen.

5. Verfahren nach einem der vorhergehenden Ansprüche, **dadurch gekennzeichnet, dass** die Referenzsicherheitsdaten (96) einen datenfreien Abschnitt (102) aufweisen.

6. Verfahren nach Anspruch 5, **dadurch gekennzeichnet, dass** zumindest der datenfreie Abschnitt (102) in den Referenzsicherheitsdaten (96) für unterschiedliche Referenzsignale (82) variiert wird.

7. nach einem der vorhergehenden Ansprüche, **dadurch gekennzeichnet, dass** die Referenzerwartungsdaten variiert werden.

8. Verfahren nach einem der vorhergehenden Ansprüche, **dadurch gekennzeichnet, dass** das Referenzsignal für die Sicherheitsdaten einen vorgegebenen Sicherheitsbereich (92) nutzt, und die Referenzsicherheitsdaten (96) zumindest in einem Teil des Sicherheitsbereichs (92) gespeichert werden.

9. Verfahren nach einem der vorhergehenden Ansprüche, **dadurch gekennzeichnet, dass** beim Vergleichen der Referenzsicherheitsdaten (96) mit Referenzerwartungsdaten eine höhere Anforderung als beim Vergleichen der Sicherheitsdaten mit den Erwartungsdaten gestellt wird.

10. Abstandsbestimmungssystem (10), welches dazu dient, zumindest einen Abstand (12) zwischen wenigstens zwei Einheiten (14, 16) des Abstandsbestimmungssystems (10) unter Nutzung von Funk zu bestimmen, wobei das Abstandsbestimmungssystem (10) eine Mobileinheit (14) als eine der wenigstens zwei Einheiten (14, 16) und eine Stationseinheit (16) als eine zweite der wenigstens zwei Einheiten (14, 16) sowie wenigstens eine Auswerteeinheit (18) aufweist, wobei die Mobileinheit (14) und die Stationseinheit (16) an zwei voneinander unterschiedlichen Positionen anordbar sind, wobei das Abstandsbestimmungssystem (10) ausgebildet ist, dass
- die Mobileinheit (14) ein erstes Funksignal (46) mittels eines Sende-/Empfangsteils (20) der Mobileinheit (14) aussendet, wobei die Mobileinheit (14) einen ersten Sendewert erfasst, der abhängig von einem Zeitpunkt des Aussendens des ersten Funksignals (46) durch das Sende-/Empfangsteil (20) der Mobileinheit (14) bestimmt ist,
- die Stationseinheit (16) das erste Funksignal (46) mittels eines Sende-/Empfangsteils (22) der Stationseinheit (16) empfängt, wobei die Stationseinheit (16) einen ersten Empfangswert erfasst, der abhängig von einem Zeitpunkt des Empfangens des ersten Funksignals (46) durch das Sende-/Empfangsteil (22) der Stationseinheit (16) bestimmt ist,
- die Stationseinheit (16) als Reaktion auf das Empfangen des ersten Funksignals (46) ein zweites Funksignal (48) mittels des Sende-/Empfangsteils (22) der Stationseinheit (16) aussendet, wobei die Stationseinheit (16) einen zweiten Sendewert erfasst, der abhängig von einem Zeitpunkt des Aussendens des zweiten Funksignals (48) durch das Sende-/Empfangsteil (22) der Stationseinheit (16) bestimmt ist,
- die Mobileinheit (14) das zweite Funksignal (48) mittels dem Sende-/Empfangsteil (20) der Mobileinheit (14) empfängt, wobei die Mobileinheit (14) einen zweiten Empfangswert erfasst, der abhängig von einem Zeitpunkt des Empfangens des zweiten Funksignals (48) durch das Sende-/Empfangsteil (20) der Mobileinheit (14) bestimmt ist,
- wobei zumindest die Mobileinheit (14) oder die Stationseinheit (16) ausgebildet ist, dem jeweils auszusendenden Funksignal (46, 48) Sicherheitsdaten hinzuzufügen,
- wobei zumindest die Mobileinheit (14) oder die Stationseinheit (16) ferner ausgebildet ist, die Sicherheitsdaten aus einem jeweiligen empfangenen Funksignal (46, 48) auszulesen und zumindest teilweise mit vorgegebenen Erwartungsdaten zu vergleichen,
- wobei die Auswerteeinheit (18) ausgebildet ist, abhängig vom Vergleichen der Sicherheitsdaten mit den Erwartungsdaten den Abstand (12) zwischen der Mobileinheit (14) und der Stationseinheit (16) zumindest abhängig vom ersten und zweiten Sendewert sowie abhängig vom ersten und zweiten Empfangswert zu bestimmen,
**dadurch gekennzeichnet** durch
- eine Überwachungseinheit (78, 80), die ausgebildet ist, ein Referenzsignal (82) mit Referenzsicherheitsdaten (96) zu erzeugen und das Referenzsignal (82) an einen Antennenanschluss (26) des Sende-/Empfangsteils (22) der die Überwachungseinheit (78, 80) aufweisenden Einheit (16) abzugeben,
- wobei das Sende-/Empfangsteil (22) der die Überwachungseinheit (78, 80) aufweisenden Einheit (16) ausgebildet ist, das Referenzsignal (82) zu empfangen, die Referenzsicherheitsdaten (96) aus dem Referenzsignal (82) auszulesen, und die ausgelesenen Referenzsicherheitsdaten (96) mit vorgebbaren Referenzerwartungsdaten zu vergleichen, und
- wobei die Auswerteeinheit (18) ferner ausgebildet ist, abhängig von dem Vergleichen eine Funktionstüchtigkeit der die Überwachungseinheit (78, 80) aufweisenden Einheit (16) abzuschätzen.

11. Abstandsbestimmungssystem nach Anspruch 10, **dadurch gekennzeichnet, dass** zumindest die Stationseinheit (16) oder die Mobileinheit (14) die Auswerteeinheit (18) aufweist.

12. Abstandsbestimmungssystem nach einem der Ansprüche 9 oder 10, **dadurch gekennzeichnet, dass** zumindest die die Überwachungseinheit (78, 80) aufweisende Einheit (16) eine Koppeleinheit (30) zum Koppeln des Antennenanschlusses (26) mit einer Antenneneinheit (32) der die Überwachungseinheit (78, 80) aufweisenden Einheit (16) aufweist, wobei die Überwachungseinheit (78, 80) an die Koppeleinheit (30) angeschlossen ist.

13. Abstandsbestimmungssystem nach Anspruch 12, **dadurch gekennzeichnet, dass** das Abstandsbestimmungssystem (10) ausgebildet ist, das Aussenden und Empfangen des ersten und des zweiten Funksignals (46, 48, 72) in jeweiligen vorgegebenen, zeitlich aufeinanderfolgenden Kommunikationszeiträumen stattfindet und das Abgeben und Empfangen des Referenzsignals (82) sowie das zugehörige Auswerten und Vergleichen in einem jeweiligen Überwachungszeitraum erfolgt, der zeitlich zwischen zwei aufeinanderfolgenden Kommunikationszeiträumen ist, wobei das Abstandsbestimmungssystem (10) ausgebildet ist, die Koppeleinheit (30) abhängig vom Überwachungszeitraum zu betreiben.

14. Mobileinheit (14) des Abstandsbestimmungssystems (10) nach einem der Ansprüche 10 bis 13.

15. Stationseinheit (16) des Abstandsbestimmungssystems (10) nach einem der Ansprüche 10 bis 13.
